# EUROPEAN PATENT SPECIFICATION

(11) **EP 1 930 172 B1**
(45) Date of publication and mention of the grant of the patent: **04.07.2012**
(21) Application number: 06796327.2
(22) Date of filing: 10.08.2006
(51) Int. Cl.: G11B 7/24, G11B 7/246, G11B 7/249, G11B 7/247

(54) **OPTICAL RECORDING MEDIUM, AZO-TYPE IRON CHELATE COLORING MATTER, AND AZO-TYPE METAL CHELATE COLORING MATTER ADDITIVE**
OPTISCHES AUFZEICHNUNGSMEDIUM, AZO-EISENCHELAT-FÄRBEMATERIAL UND AZO-METALLCHELAT-FÄRBEMATERIAL ZUSATZ
SUPPORT D'ENREGISTREMENT OPTIQUE, COLORANT CHÉLATE DE FER AZOÏQUE ET ADDITIF DE COLORANT CHELATE MÉTALLIFÈRE AZOÏQUE

(30) Priority: 10.08.2005 JP 2005231901
(43) Date of publication of application: 11.06.2008
(73) Proprietor: Mitsubishi Kagaku Media Co., Ltd., Minato-ku Tokyo (JP)
(72) Inventor: SHODA, Hisashi, Tokyo 108-0014 (JP); SATAKE, Kenichi, Tokyo 108-0014 (JP); NAITO, Yuko, Tokyo 108-0014 (JP)
(74) Representative: HOFFMANN EITLE
(86) International application number: PCT/JP2006/315828
(87) International publication number: WO 2007/018263

(56) References cited:
- JP-A- 09 039 394
- JP-A- 2001 199 169
- JP-A- 2001 277 721

## Description

### Technical Field

The present invention relates to an optical recording medium, an azo iron chelate dye and an azo metal-chelate dye additive. More particularly, the present invention relates to a red or blue laser-ready optical recording medium, and also relates to an azo iron chelate dye and an azo metal-chelate dye additive which are used as optical recording material for the optical recording medium.

### Background Art

Various types of optical recording media such as CD-R/RW, DVD-R/RW, MO are currently widely recognized and spread as external storages for information processing apparatuses such as computers because they can store a large volume of information and can be randomly accessed easily. Among these, organic dye containing optical recording media represented by CD-R or DVD-R are thought to be superior in that they are inexpensive and easy to produce. For DVD-R and DVD+R (hereinafter, collectively referred to as "DVD-R" occasionally), which are now becoming mainstream of optical recording media, there is a demand to realize excellent recording characteristics during high-speed recording, more concretely, during recording more than 8 times as rapid as standard reading speed of DVD (3.5 m/s).

Incidentally, cyanine dye used in the above-mentioned CD-R is a dye that is not very excellent in light resistance. Therefore, the way to enhance light resistance has been studied. For example, such ways as adding nickel dithiol complex, nickel complex of azo dye or carotenoid compound as singlet oxygen quencher and forming salt of cyanine dye and the aforementioned quencher have been reported a lot (refer to Patent Documents 1 to 3).

In addition, with an increase in quantity of handled information, there is a demand to increase the recording density of media. Optical recording media capable of high-density recording and reading using laser beam with short oscillation wavelengths (hereinafter, referred to as "short wavelength") such as blue laser, being markedly developed in recent years, have been proposed.
JP 2001277721 discloses an optical recording medium having at least a recording layer arranged directly on a substrate or via an under coating layer, the recording layer contains at least one kind of an azo compound carrying a phenyl group and an imidazole group, and an azo metal chelate compound consisting of duo-trio valent metal and/or its salt.

[Patent Document 1] Japanese Patent Application Laid-Open No. Sho 59-55794
[Patent Document 2] Japanese Patent Application Laid-Open No. Hei 9-323478
[Patent Document 3] Japanese Patent Application Laid-Open No. 2000-190641

### Disclosure of the Invention

### Problem to Be Solved by the Invention

However, the present investors' study has shown that light resistance and such recording characteristics during high-speed recording are often incompatible. In addition, many kinds of organic dye for blue laser beam used for high-density recording are poor in light resistance (refer to, for example, specifications of Japanese Patent Application No. 2005-131925 and No. 2005-051719).

Furthermore, knowledge about additives used for enhancing light resistance of dye for short-wavelength recording is not sufficient, unlike ones used for cyanine dyes for recording beam whose wavelength is close to 800 nm, of which singlet oxygen quencher have been reported a lot.

The present invention has been made to solve problems when developing optical recording media for high-density and high-speed recording. More particularly, the present invention relates to an additive which is effective on metal complexes or metal-chelate dyes, of which knowledge about deterioration in light resistance has not been obtained sufficiently. The conventional singlet oxygen quenchers (lots of them are described in Patent Document 1) are considered to be not very effective for the improvement of light resistance of such metal complexes and metal-chelate dyes. The present invention has particularly been made to provide additives which are used for optical recording media of which recording is performed with wavelengths of 700 nm or shorter and are effective for the improvement of light resistance of such organometallic complexes and metal-chelate dyes. Actually, such additives are also effective for the improvement of light resistance of organic dyes having n-n* transition, such as cyanine dye, which have been studied long about mechanism of deterioration in light resistance.

Therefore, the object of the present invention is to provide an optical recording medium, which makes information be recorded and read with light having wavelength of 700 nm or shorter, with excellent light resistance, high-speed recording and high-density recording, and also is to provide a new additive which can improve light resistance of an optical recording medium by means of being contained in the recording layer together with a host dye.

### Means for Solving the Problem

The present inventors made an intensive investigation based on the above-mentioned current condition and have found that a particularly excellent effect of improving light resistance can be obtained by means of containing, as additive, a metal-chelate dye having a specific central metal ion in a recording layer together with a host dye as specified in the appended claims. As a result, the inventors have attained the present invention.

Namely, the subject matter of the present invention lies in an optical recording medium comprising a substrate, a recording layer formed on said substrate and containing a host dye which can record or read information by being irradiated with light having wavelength of 700 nm or shorter, and a reflective layer; wherein said recording layer contains at least an azo metal-chelate dye additive as specified in the appended claim 2.

In this context, "an optical recording medium comprising a host dye, which can record or read information by being irradiated with light having wavelength of 70.0 nm or shorter" means an optical recording medium of which absorption maximum, of the recording layer, having the largest absorbance in the wavelength region of 400 nm to 800 nm is located at 630 nm or shorter. In other words, it means an optical recording medium of which reflectance with respect to semiconductor laser beam, with wavelength of 700 nm or smaller and closest to the absorption maximum wavelength having the largest absorbance, is more than 10 %.

The central metal ion of said azo metal-chelate dye additive is Fe²⁺ (Claim 1).

It is preferable that said azo metal-chelate dye additive is contained with the concentration of 0.1 weight % or more and 50 weight % or less in said host dye of said recording layer (Claim 4).

Said azo metal-chelate dye additive has, in a state of film or solution, one or more absorption maximums at wavelength ranges of 400 nm to 630 nm and 680 nm to 800 nm respectively (Claim 1).

It is preferable that said recording layer has one or more absorption maximums at wavelength ranges of 400 nm to 630 nm and 680 nm to 800 nm respectively (Claim 5).

It is preferable that said host dye is an azo metal-chelate dye comprising a ligand, where active hydrogen contained in X is eliminated from an azo compound represented by general formula (I) below, and Zn²⁺ (Claim 6). 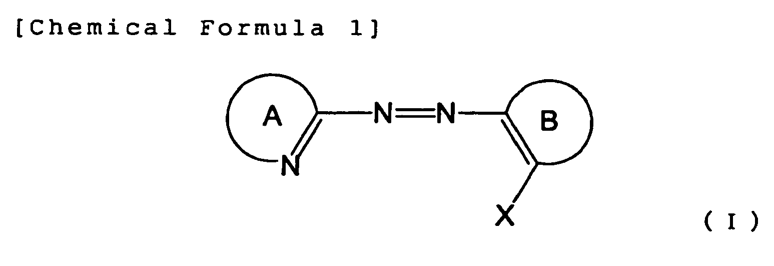 (In general formula (I), ring A is an aromatic heterocycle, which may have a substituent; *X* is an organic group having active hydrogen; and ring B is an aromatic ring or aromatic heterocycle, which may have a substituent in addition to *X*.)

It is preferable that said host dye is a cyanine dye represented by general formula (II) below (Claim 7). 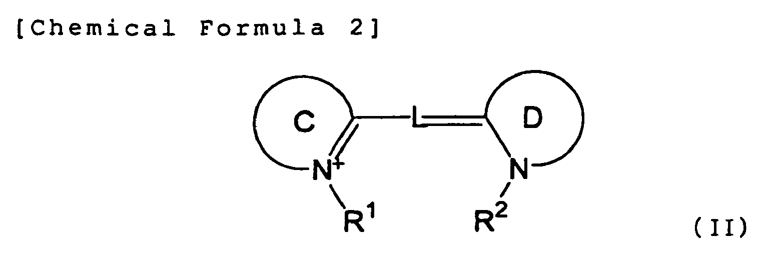 (In general formula (II), ring *C* and ring *D* each represents independently, an indolenin ring, benzoindolenin ring or dibenzoindolenin ring; *L* represents a monomethine group or trimethine group; and *R¹* and *R²* each represents, independently of each other, an alkyl group, which may have a substituent.)

Another subject matter of the present invention lies in an azo iron chelate dye comprising two ligands, where active hydrogen contained in *X* is eliminated from an azo compound represented by general formula (III) below respectively, and Fe²⁺ wherein said azo iron chelate dye has, in a state of film or solution, one or more absorption maximums at wavelength ranges of 400 nm to 630 nm and 680 nm to 800 nm, respectively (Claim 1). 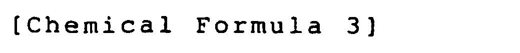 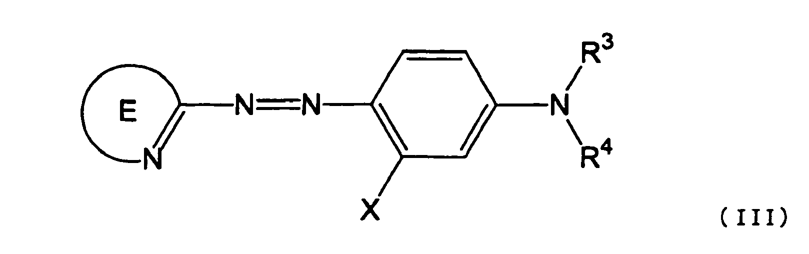 (In general formula (III), ring *E* is an aromatic heterocycle, which may have a substituent; *X* is an organic group having active hydrogen; and *R*³ and *R*⁴ each represents independently, an alkyl group, which may have a substituent. However, *R³* and *R⁴* may be connected to each other to form a ring, and either one or both of *R³* and *R⁴* may be connected to a benzene ring to form 4 to 7 membered ring, which may be condensed to form a benzene ring. All of rings *E*, *X, R³* and *R⁴*, belonging to the two ligands, may be the same as or different from each other.)

Still another subject matter of the present invention lies in an azo metal-chelate dye additive to be used for a recording layer of an optical recording medium, wherein said azo metal-chelate dye additive comprises said above-mentioned azo iron chelate dye (claim 1).

Still another subject matter of the present invention lies in an azo metal-chelate dye additive to be used for a recording layer of an optical recording medium, wherein said azo metal-chelate dye additive comprises two ligands, where active hydrogen contained in *X* is eliminated from an azo compound represented by general formula (IV) below respectively, and co²⁺, and said azo metal-chelate dye additive has, in a state of film or solution, one or more absorption maximums at wavelength ranges of 400 nm to 630 nm and 680 nm to 800 nm respectively (Claim 10). 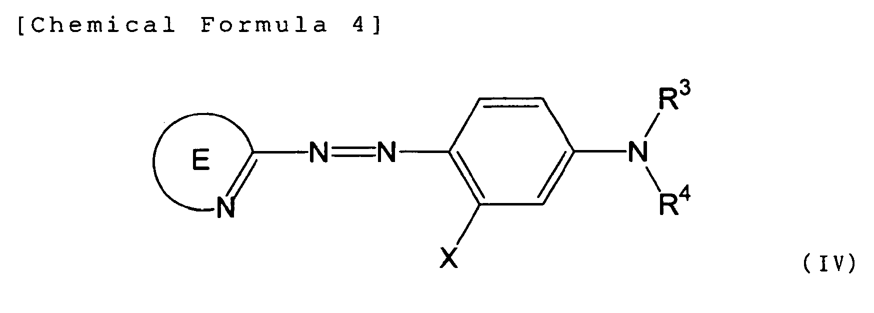 (In general formula (IV), ring E is an aromatic heterocycle, which may have a substituent; *X* is an organic group having active hydrogen; and *R³* and *R⁴* each represents independently, an alkyl group, which may have a substituent. However, *R³ and R*⁴ may be connected to each other to form a ring, and either one or both of *R³* and *R⁴* may be connected to a benzene ring to form 4 to 7 membered ring, which may be condensed to form a benzene ring.
All of rings *E*, *X*, *R³* and *R⁴*, belonging to the two ligands, may be the same as or different from each other.)

In the present invention, azo metal-chelate dye used as additive for a recording layer of a optical recording medium (hereinafter, referred to as "azo metal-chelate dye additive" or simply "additive") is distinguished from organometallic complex, such as nickel dithiol complex, which is a conventional singlet oxygen quencher. The definition of the distinction will be described later.

### Advantageous effects of the invention

The optical recording medium of the present invention is excellent in light resistance, as well as can realize excellent high-speed recording and high-density recording.
Furthermore, the azo metal-chelate dye additive of the present invention can enhance the light resistance of the optical recording medium, by making it contained in the recording layer together with host dye.
In addition, azo iron chelate dye of the present invention can be preferably used as above-mentioned azo metal-chelate dye additive of the present invention.

### Brief Description of the Drawings

Fig. 1(a) is a partial sectional view illustrating schematically an example of the layer structure of the optical recording medium of first embodiment of the present invention. Fig. 1(b) is a partial sectional view illustrating schematically an example of the layer structure of the optical recording medium of second embodiment of the present invention.
Fig. 2(a) is a partial sectional view illustrating schematically an example of the layer structure of the optical recording medium of third embodiment of the present invention. Fig. 2(b) is a partial sectional view illustrating schematically an example of the layer structure of the optical recording medium of fourth embodiment of the present invention.
Fig. 3(a) is a partial sectional view illustrating schematically an example of the layer structure of the optical recording medium of fifth embodiment of the present invention. Fig. 3(b) is a partial sectional view illustrating schematically an example of the layer structure of the optical recording medium of sixth embodiment of the present invention.
Fig. 4 is a graph representing retention rates of dye of recording layer samples using additives having ligands (I-1) of Example Groups 3(1) and 3(2).
[Fig. 5] Figs. 5(a) and 5(b) are both graphs representing differences of effects, according to central metal ions of additives, on the light resistances (retention rates of dye) of recording layer samples in Example Group 3(1).
[Fig. 6] Figs. 6(a) and 6(b) are both graphs representing differences of effects, according to central metal ions of additives, on the light resistances (retention rates of dye) of recording layer samples in Example Group 3(2).
[Fig. 7] Figs. 7(a) and 7(b) are both diagrams for explaining a method for deciding *b*/*a* value by the absorption spectrum of a recording layer containing an additive.
[Fig. 8] Figs. 8(a) and 8(b) are both graphs showing intensity ratios of absorption band which is 680 nm or longer against main absorption band of each single layer sample of additives in Example Group 2.
[Fig. 9] Fig. 9 is a graph showing the relationship between *b*/*a* value and the light resistance of recording layer samples in Example Group 3(1).
[Fig. 10] Fig. 10 is a graph showing the relationship between *b*/*a* value and the light resistance of recording layer samples in Example Group 3(2).
[Fig. 11] Fig. 11 is a graph showing retention rates of dye for each single layer sample of additive in Example Group 2, with respect to each central metal ion.
[Fig. 12] Figs. 12(a) and 12(b) show absorption spectra of single layer samples of additives (8) and (17) of Example Group 2 respectively.

### Explanation of Letters or Numerals

100,200,300,400,500,600 Optical recording medium
101,201 Substrate
102,202,407 Recording layer
103,203 Reflective layer
104,204 Protective layer
301,401,501,601 Substrate(1)
302,502,602 Recording layer(1)
303,402,503,603 Reflective layer(1)
304,403 Protective layer(1)
305,404,507 Adhesive layer
306,405 Protective layer(2)
307,406,506,606 Reflective layer(2)
308,505,605 Recording layer(2)
309, 408, 508, 607 Substrate(2)
312,313,412,611,612 Disk to be bonded
411 Dummy disk
504 Intermediate layer
604 Adhesive layer (Intermediate layer)
608 Barrier layer
110,210,310,910,510,610 Laser beam

### Best Modes for Carrying Out the Invention

The present invention will be described in detail below. However, the present invention is not at all limited to the below description, but any modification can be made without departing from the scope of the invention.

### [I. Basic Concept of the Present Invention]

An optical recording medium according to the present invention comprises a substrate and a recording layer formed on the substrate and containing a host dye, which can record or read information by being irradiated with light having wavelength of 700 nm or shorter, wherein the recording layer contains at least an azo metal-chelate dye additive as specified in appended claims 2 and 10.

An organic dye of which decomposition rate is larger is preferable when it is used for a recording layer of high-speed recording DVD-R, for example with 8-times velocity or 10-times velocity or faster, using a recording beam with wavelength of 700 nm or shorter or of high-density recording layer using blue laser or the like. However, the decomposition rate and light resistance are not always compatible. In such case, it is desirable to contrive some makeup for light resistance of the dye contained in the recording layer. There have been many reports about the improvement of the light resistance as mentioned earlier, but most of them are about the improvement of the light resistance of organic dyes having n-n* transition, which is used for recording with red laser beam.

Particularly, it is known that a singlet oxygen quencher such as nickel dithiol complexes and carotenoids like β-carotene is made to be contained in cyanine dyes for CD-R. A singlet oxygen is thought to be generated by light excitation of compounds like cyanine dye and thereby induce a cleavage of the carbon-to-carbon double bond, which leads to discoloration of the dye. The above-mentioned nickel complexes and carotenoids are thought to enhance the light resistance by means of quenching the singlet oxygen through the absorption band of long-wavelength regions in the vicinity of 1000 nm.

As described above, it is known that the deterioration of light resistance of organic dyes having n-n* transition, such as an organic dye derived from long polymethine chain like trimethine cyanine dye, is induced by the generation of singlet oxygen.

On the other hand, it has not been known in general that there are organometallic complexes such as nickel dithiol complex, which is a singlet oxygen quencher, and metal-chelate dyes such as nickel complex of azo dye having poor light resistance like the above mentioned cyanine dye.

However, the present inventors have found and reported that there are some metal-chelate dyes having insufficient light resistance, in the above-mentioned patent application. Then we have found that, as described below, previously-known UV absorbing agent or singlet oxygen quencher is not very effective for improving light resistance of such metal-chelate dyes, in the present invention.

The present inventors made an intensive investigation and consequently have found that a metal-chelate dye additive having a specific central metal ion, more preferably a metal-chelate dye additive h-aving both a specific ligand and a specific central metal ion can enhance light resistance of metal-chelate dyes having insufficient light resistance, which can make information be recorded or read by being irradiated with light having wavelength of 700 nm or shorter.

Actually, the present invention can also improve light resistance of organic dyes having n-n* transition, which can make information be recorded or read with light having wavelength of 700 nm or shorter.

The present invention relates to an additive for improving light resistance of organic dyes, which is generally thought to be rigid, for the recording beam of shorter wavelengths than organic dyes for the recording beam of wavelengths in the vicinity of 780 nm, which have been known as dyes for CD-R. "Additive" in this context means a component added in 50 weight % at a maximum against the organic dye which serves as main component of the recording layer (hereinafter, referred to as "host dye", as needed). More concretely, it means a component added in 50 weight % at a maximum against the weight of host dye of which light resistance is below 70 %.

The host dye is not specially limited as far as it is a dye that can form a recoded portion without any problem in reading of high-speed recording at 8 m/s or faster using light with wavelength of 700 nm or shorter, or of high-density recording with minimum mark length of 0.4 µm or shorter. In order for the host dye to meet the requirement of excellent recording characteristics at high-speed, it is preferable to contain host dye of which retention rate of dye (also referred to as survival rate of dye), namely light resistance is below 70 %.

The value, below 70 %, of light resistance can be regarded as insufficient value of light resistance. Such host dye with insufficient light resistance has rapidity of forming a recorded portion at wavelength of recording beam, thereby an excessive deformation of the dye at the time of recording is sometimes difficult to occur. Particularly in such case, there is a greater possibility of high-speed recording and high-density recording (refer to the specification of Japanese Patent Application No. 2005-131925 or the like).

Accordingly, an additive of the present invention is not made to be a host dye of a recording layer. This is because the high-speed recording characteristics or high-density recording characteristics of the host dye should not be impaired.

As host dye, preferable is either an azo metal-chelate dye comprising a ligand, where hydrogen ion is eliminated from an azo compound represented by general formula (I) below, and Zn²⁺ or a cyanine dye represented by general formula (II) below.

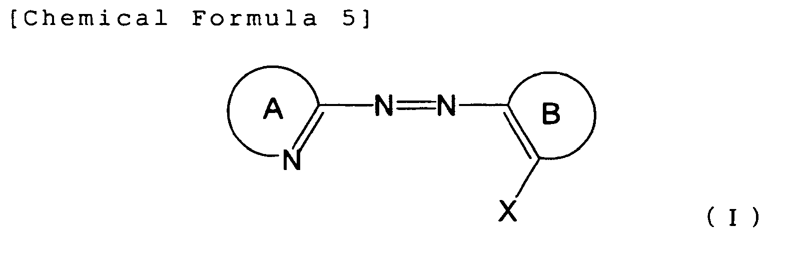

In general formula (I), ring *A* is an aromatic heterocycle, which may have a substituent. As examples can be cited thiazole, thiadiazole, imidazole, triazole, pyridine and pyrimidine. Of these, thiadiazole, imidazole and pyridine are preferable.

In general formula (I), *X* is a group having active hydrogen. As examples can be cited sulfone acid, carboxylic acid, hydroxyl group, sulfonamide and carboxamido. Of these, sulfonamide and carboxamido are preferable.

In general formula (I), ring B is an aromatic ring or aromatic heterocycle, which may have a substituent in addition to *X*. As examples can be cited benzene, naphthalene, pyridine and qunoline. Of these, benzene is preferable. As examples of the substituent can be cited amino group, alkyl group, alkoxy group and halogen atom. Of these, amino group is preferable.

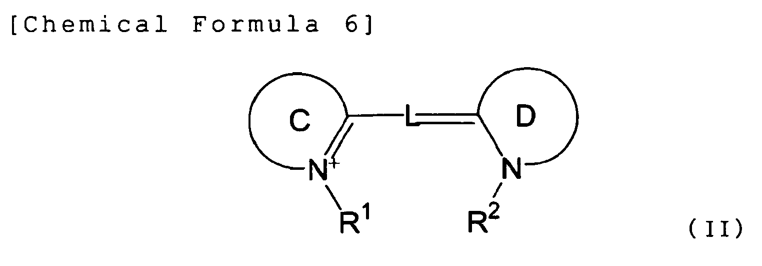

In general formula (II), ring C and ring D each represents, independently of each other, an indolenin ring, benzoindolenin ring or dibenzoindolenin ring. Of these, benzoindolenin ring is preferable.

In general formula (II), L represents a monomethine group or trimethine group. Of these, trimethine group is preferable.

In general formula (II), R¹ and R² each represents, independently of each other, an alkyl group, which may have a substituent. As examples can be cited methyl group, ethyl group and hexyl group. Of these, methyl group and ethyl group are preferable. As examples of the substituent can be cited alkyl group, aryl group, halogen atom, alkoxy group, and amino group. Of these, alkyl group and alkoxy group are preferable.

It is preferable to perform "the specific test for light resistance" for evaluating the above-mentioned retention rate of dye according to the condition for light resistance test with Wool Reference #5 described in ISO-105-B02.

As explained below, the effect of the present invention is more remarkable when it is used for an optical recording medium in which azo metal-chelate dye with poor light resistance is used as host dye.

In an optical recording medium to which the present invention is applied, the recording layer thereof contains at least a metal-chelate dye additive as specified in appended claims 2 and 10. Using such additive, having dye compound as the ligand and having Fe ²⁺ or co²⁺ as the central metal ion, can realize greater effect of improving the light resistance than using the conventional nickel complexes. This is probably because, as Fe ²⁺ and Co²⁺ have less d-electrons than Ni²⁺, the metal-chelate dyes having especially Fe²⁺ or Co²⁺ as central metal ion has larger stabilization energy and has absorption band with an absorption peak at wavelength area which is longer than the metal-chelate dye having Ni²⁺ as central metal ion. Furthermore, by optimizing the combination of those central metal ions and ligands, the additive can realize more excellent effect of improving the light resistance. In other words, by adjusting the absorption wavelength, excitation state or the like of the additive, the additive can realize more excellent effect of improving the light resistance. This is probably because the additive having lower energy level than the host dye can quench or deactivate the light energy absorbed in the host dye having poor light resistance more efficiently, which can prevent the discoloration of the host dye.

First, the difference of the absorption band wavelength according to the kinds of the central metal ion will be explained concretely, according to the ligand field theory. For example, when the additive has Co²⁺ as central metal ion, the absorption band with larger absorbance (sometimes referred to as "main absorption band") often exists at the longer side of the wavelength than when the additive has Ni²⁺ as central metal ion, as shown later in [Table 5] of [Example]. When the additive has Fe²⁺ as central metal ion, an absorption band exists at the longer wavelength side of 680 nm or longer. When the additive has Co²⁺, which usually does not have an absorption at wavelength side of 680 nm or longer, as central metal ion, use of specific ligands exemplified in Example Groups to be described later can produce an azo cobalt-chelate dye additive having an absorption band even at longer wavelength side of 680 nm or longer. Such azo cobalt-chelate dye additive has also excellent effect of improving the light resistance.

Among the above additives having an absorption band at wavelength region of 680 nm or longer, particularly those which have ligands of such structural formulae as exemplified below show a strong absorption maximum at wavelength region of 630 nm or shorter, in addition to the above absorption band at wavelength region of 680 nm or longer. This absorption maximum can easily induce the overlapping with the absorption edge of the absorption maximum of the host dye at wavelength of 630 nm or shorter, which most of host dyes that can make information be recorded or read with light having wavelength of 700 nm or shorter possess, or the energy transmission from the host dye through a vibronic level of the host dye, which is close in energy level. Therefore such additive is thought to be more effective for improving the light resistance of the host dye.

Accordingly, the additive of the present invention has, in a state of film or solution, one or more absorption maximums at wavelength ranges of both 400 nm to 630 nm and 680 nm to 800 nm respectively.
In other words, the additive of the present invention has, in a state of film or solution, one or more absorption maximums, with respect to the wavelength range of 400 nm to 800 nm, both at shorter wavelength range of below 630 nm (namely, wavelength rage of 400 nm to 630 nm) and at longer wavelength range of over 680 nm (namely, wavelength rage of 680 nm to 800 nm), respectively.

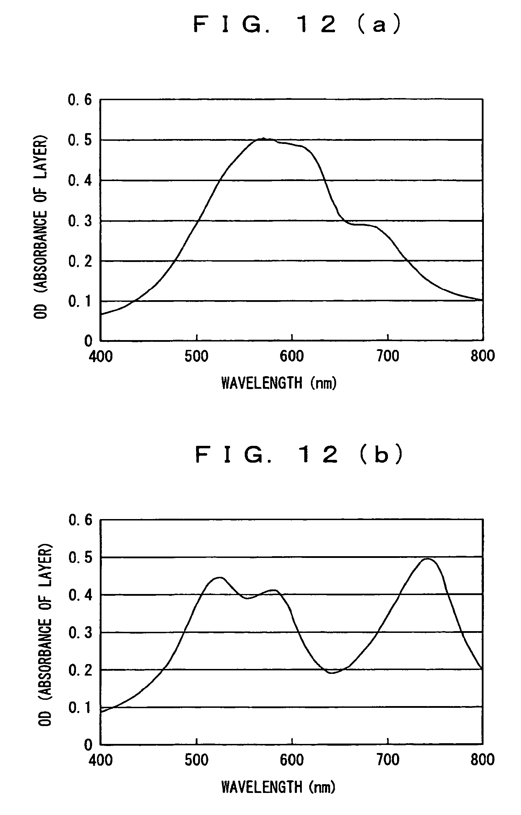

In addition, as additive of the present invention, having an object of improving the light resistance, more preferable is the one having absorption spectrum which is unfavorable as usual organic dye, namely, having absorption spectrum in which the shorter-wavelength side of absorption edge of the longer-wavelength absorption band located at 680 nm or longer and the longer-wavelength side of absorption edge of the shorter-wavelength absorption band located at 630 nm or shorter (namely, main absorption band) are overlapping (refer to Figs. 12 (a) and 12 (b), for example).

The effect of improving the light resistance, of the present invention, was more distinctively realized when the host dye was an azo metal-chelate dye than when the host dye was a cyanine dye. Namely, quenching effect or deactivating effect, by a transition-metal central ion, can be more easily exerted in a cyanine dye, which is used for recording with light having wavelength of 700 nm or shorter, than in an azo metal-chelate dye. This is why, it is thought that, in an azo metal-chelate dye, there is some factor particularly preventing the light resistance from being improved. Consequently, possibly there is some factor in the deterioration mechanism of an azo metal-chelate dye at the time of light resistance test, which does not exist in the deterioration mechanism of a cyanine dye.

When an azo chelate dye, which is generally difficult to show an effect of improving the light resistance, is used as host dye, it is possible to say there is an apparent effect of improvement in light resistance exceeding a mere masking effect due to the absorption, if 20 % or more of increase in light resistance by adding the additive of the present invention is obtained. It is more preferable that the light resistance is increased in 30 % or more by adding the additive of the present invention, and much more preferable that it is increased in 40 % or more.

On the other hand, for a dye having n-n* transition such as cyanine dye, which is generally easy to show an effect of improving the light resistance, it is possible to say there is a sufficient advantage, if 60 % or more of increase in light resistance by adding the additive of the present invention is obtained.

As described above, it is preferable to use an additive having stronger effect of improvement in light resistance for an azo metal-chelate dye than for a cyanine dye.

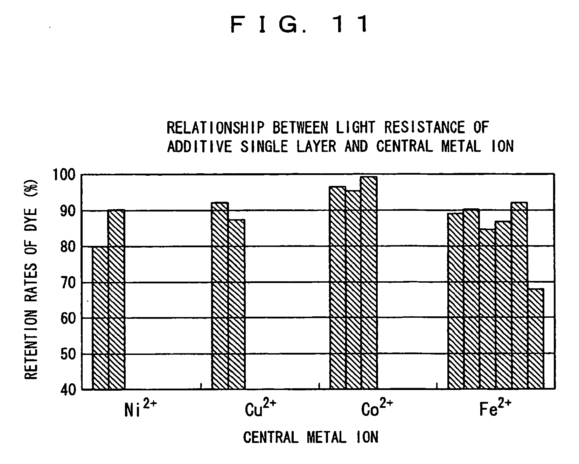

Though the effect of improvement in light resistance differs according to the central metal ion of the additive as descried above, there is no difference in light resistance of the additive itself according to the central metal ion of the additive (refer to Fig. 11 to be described ater, for example). This fact shows that the additive of the present invention, which has Fe²⁺ or Co²⁺ as central metal ion, has a particularly advantageous effect, other than previously known effects such as enhancing the light resistance of the additive itself by just changing the central metal ion and enhancing the light resistance by adding a dye with good light resistance to a dye with poor light resistance just for the absorption masking. The particularly advantageous effect of the additive of the present invention will be outstanding when the additive has Fe²⁺ or Co²⁺ as central metal ion, more specifically, either when it has Fe²⁺ as central metal ion or when it has Co²⁺ as central metal ion together with a specific type of ligand.

Furthermore, it is preferable that the recording layer containing the additive of the present invention has one or more absorption maximums at wavelength ranges of both 400 nm to 630 nm and 680 nm to 800 nm respectively, for the above-mentioned reason.
In other words, it is preferable that the recording layer containing the additive of the present invention has one or more absorption maximums, with respect to the wavelength range of 400 nm to 800 nm, both at shorter wavelength range of below 630 nm (namely, wavelength rage of 400 nm to 630 nm) and at longer wavelength range of over 680 nm (namely, wavelength rage of 680 nm to 800 nm), respectively.

It is thought that, when the additive itself has an absorption edge of a main absorption band having extremely large absorbance, such as having not less than 2×10⁴ of, preferably not less than 5× 10⁴ of molar absorptivity ε, in the vicinity of the wavelength of the recording beam or when an absorption edge located at higher energy side at wavelength of 680 nm or longer also exists in the vicinity of the wavelength of the recording beam, an excitation energy absorbed by the host dye of the recording layer is efficiently transmitted to the deactivation process from the excitation band of the additive through the above-described absorption edge, which leads to greater effect of improving the light resistance due to greater quenching effect or deactivating effect. Furthermore, it is thought that the larger the overlap between the absorption edges of the absorption bands of 630 nm or shorter and 680 nm or longer within the additive molecule, the more easily energy transmission between the two absorption bands, which leads to greater effect of improvement in the light resistance. Therefore, because a previously known dithiol metal complex, of nickel or the like, has only a weak absorption at visible wavelength, it can not exert a remarkable effect like the additive of the present invention. Accordingly, the "metal-chelate dye" according to the present invention signifies a metal-chelate dye having such large absorption, at visible wavelength in the least.

Conventionally, different compounds were added for the absorption band in the vicinity of the recording beam wavelength and the longer-wavelength absorption band in the vicinity of 1000 nm, respectively. Otherwise, by forming a salt, energy was transmitted between portions which was slightly closer to each other than between different molecules. On the other hand, in the present invention, one compound possess strong absorption bands at the above-mentioned two regions. It is thought that a greater effect of improving the light resistance can be obtained by more effective transmission of energy of the absorbed recording/reading light or the light for a light resistance test, a quenching effect and a deactivating effect, achieved by the fact that such one compound has such plural absorption bands together. The larger the absorbance, the more effective the absorption band is. In order to realize such large absorbance, it is important to select a ligand appropriately. On the other hand, the wavelength of the above-mentioned absorption band is thought to be related to the combination of the ligand and the central metal ion without doubt.

It is easy to make possible preventing a deterioration of recording characteristics or film quality of the recording layer by a method of the present invention, in which an additive is used, compared to a conventional method in which a salt is formed. This is because, by a method of the present invention, the amount of the additive added can be adjusted freely.

As such additive, more concretely, an azo metal-chelate dye having a specific type of azo dye compounds as ligand and Co²⁺ as central metal ion or azo metal-chelate dye having Fe²⁺ as central metal ion can be cited.

Furthermore, there is only 10 nm of difference in absorption peak wavelength of the above-mentioned azo metal-chelate dye additive, having one absorption maximum at wavelength of 630 nm or shorter and another absorption maximum at wavelength of 680 nm or longer within one molecule, between when it is in a state of solution and coating film. This is also contributing to a steady adding effect of the additive to be used for improvement in light resistance.

As examples of azo dye compound constituting ligands of an additive of the present invention can be cited concretely the compounds below.

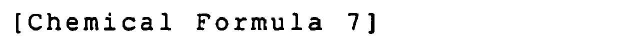

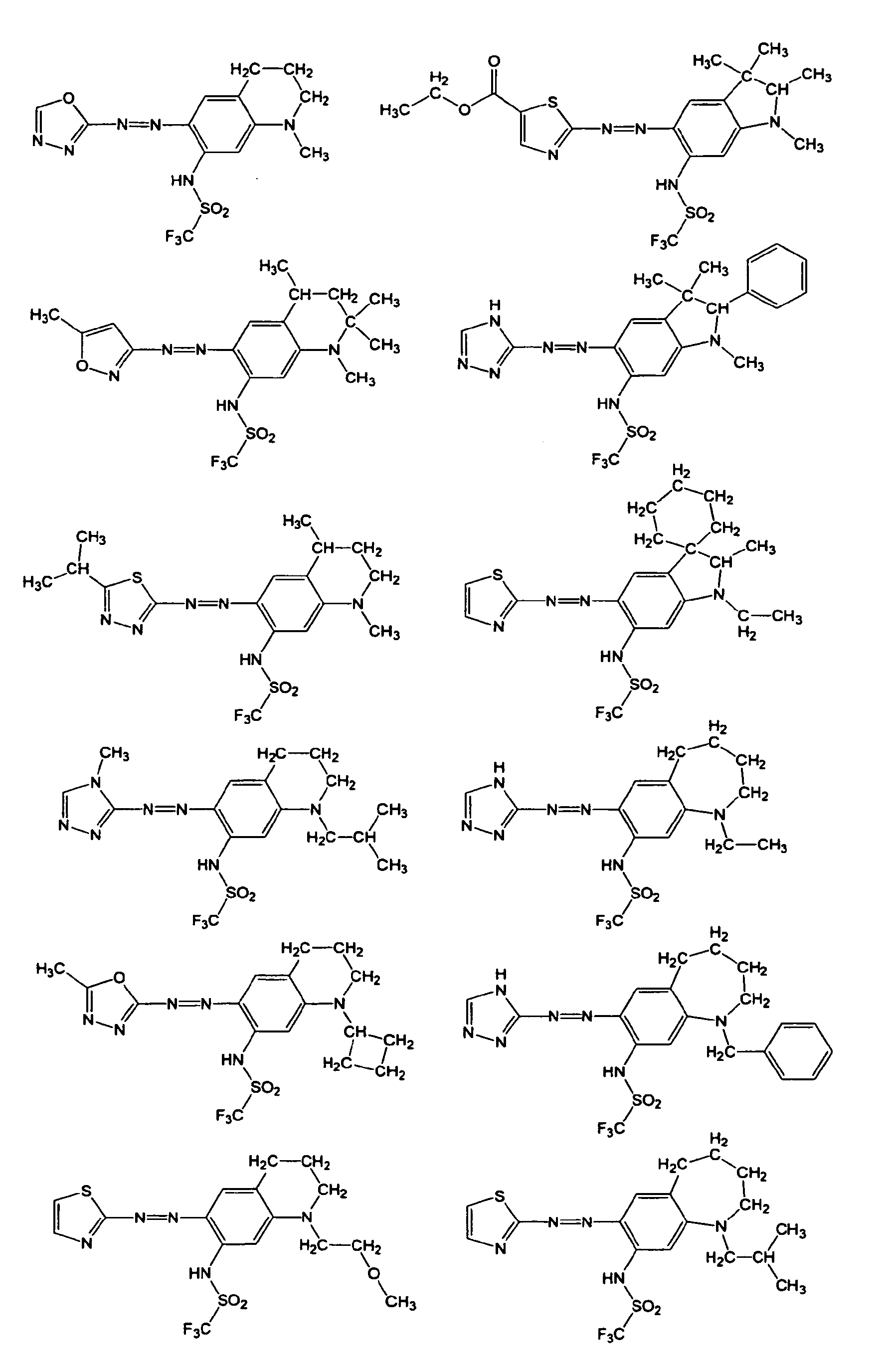

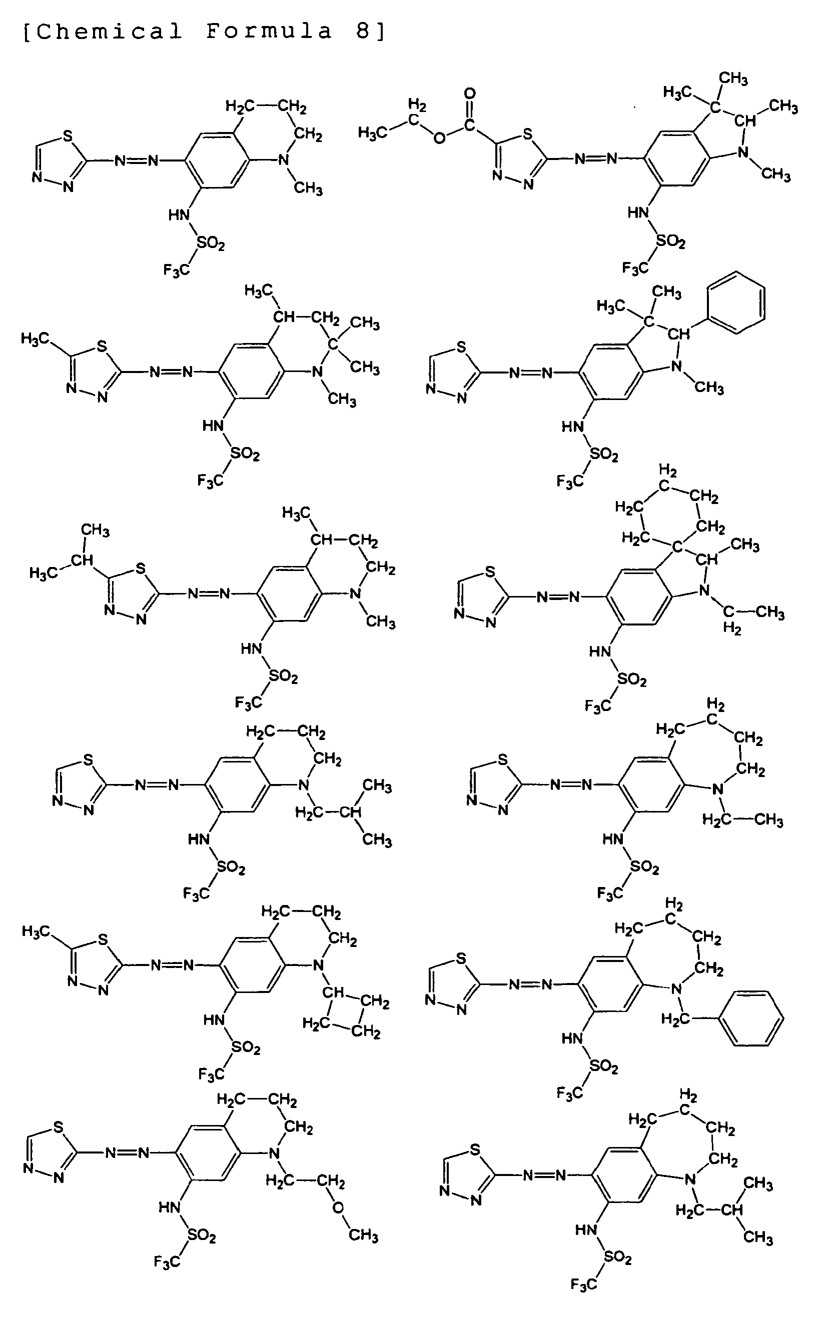

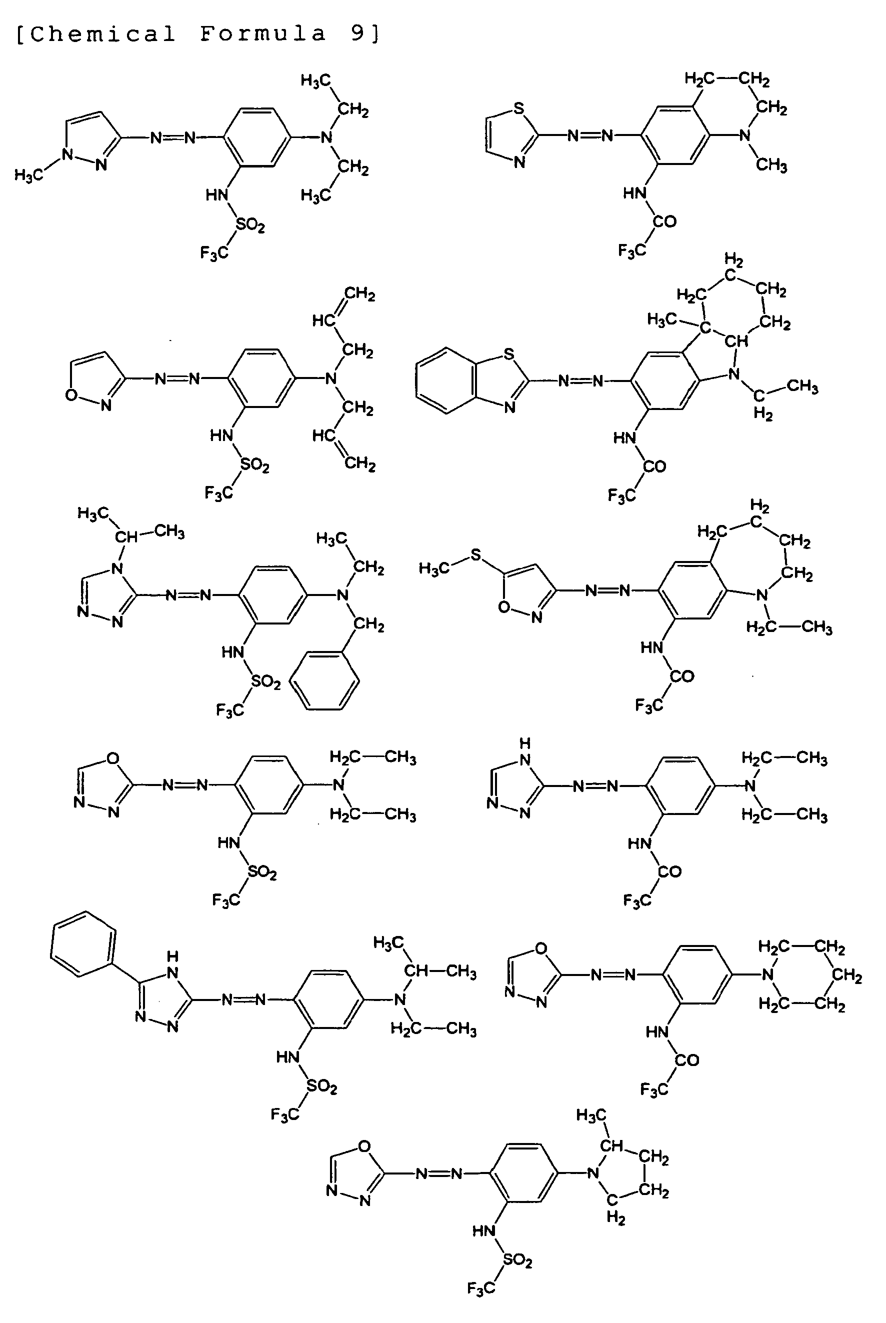

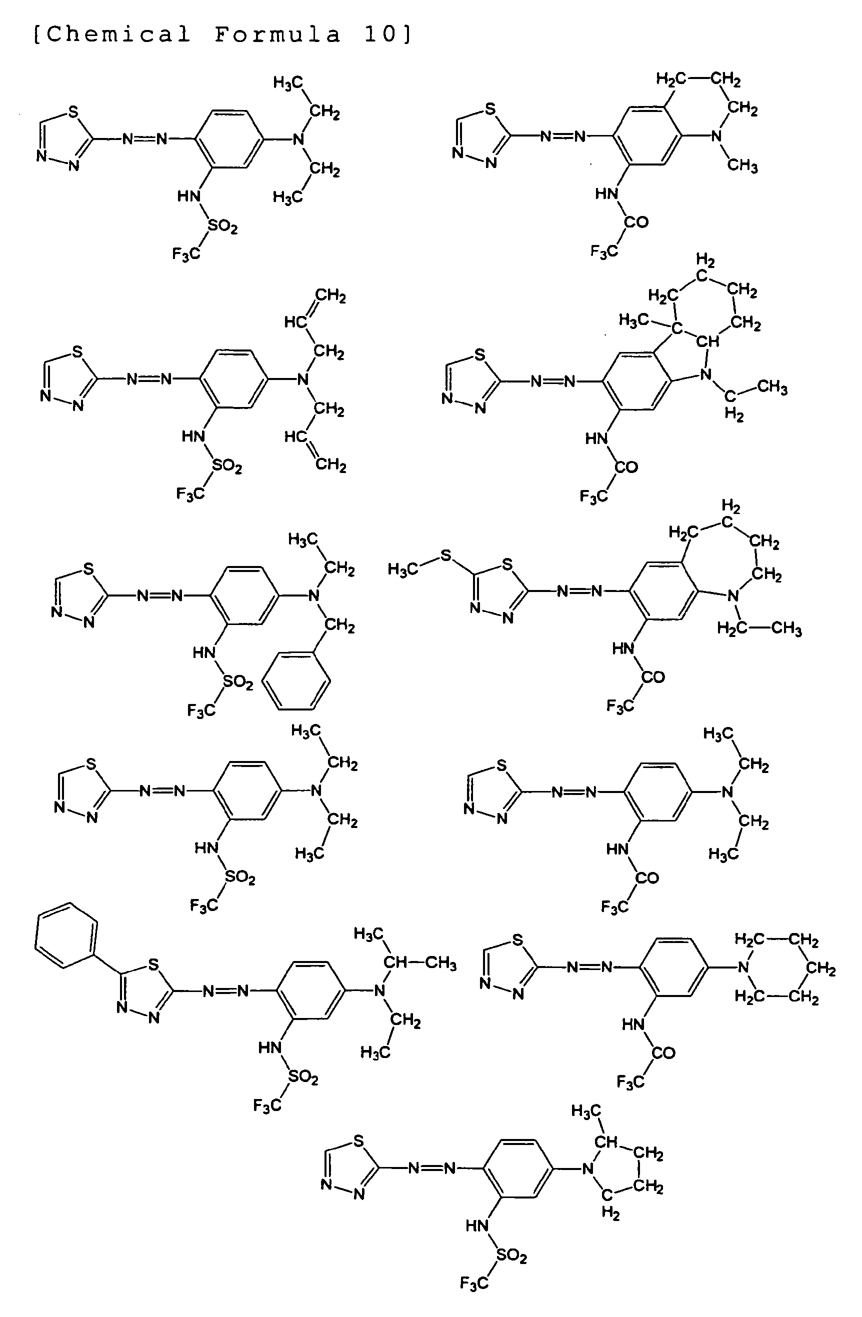

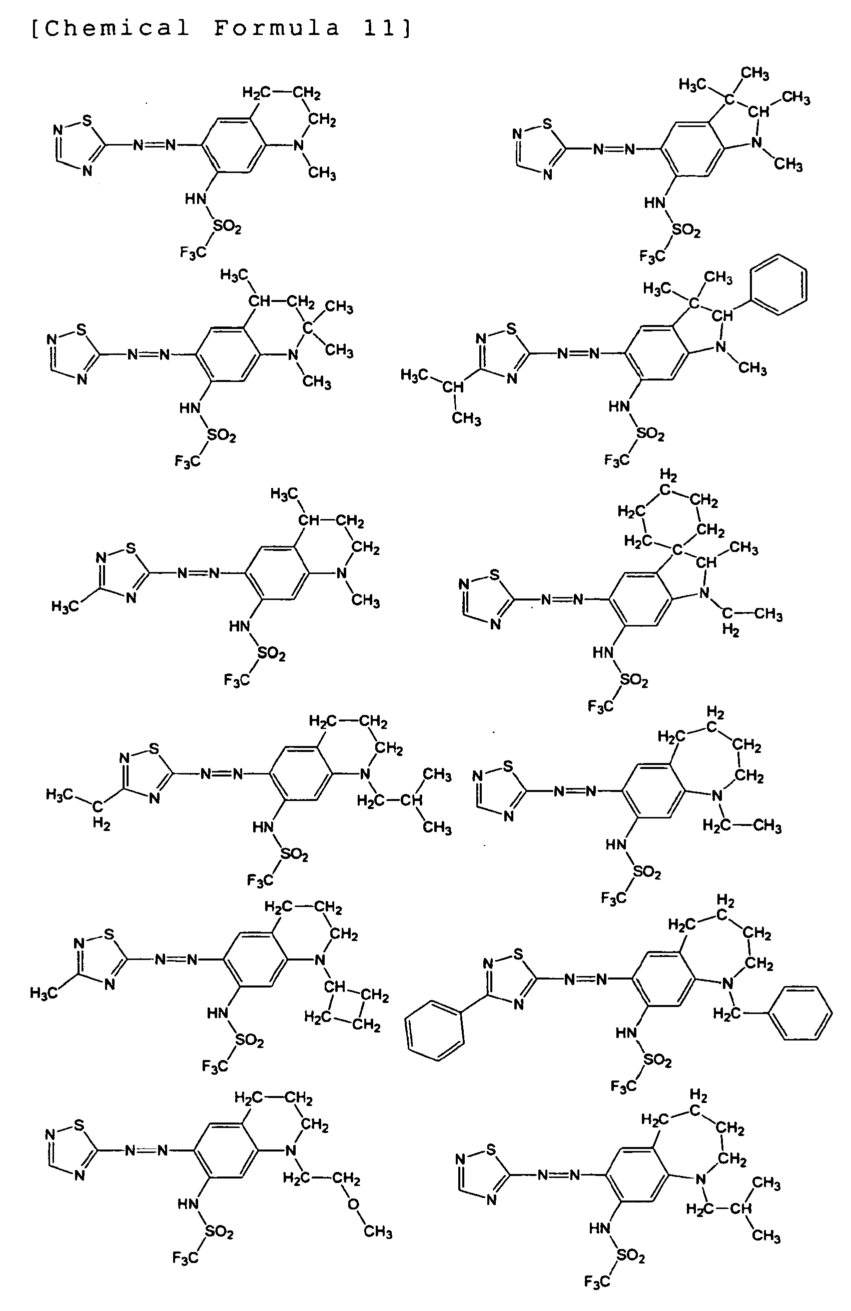

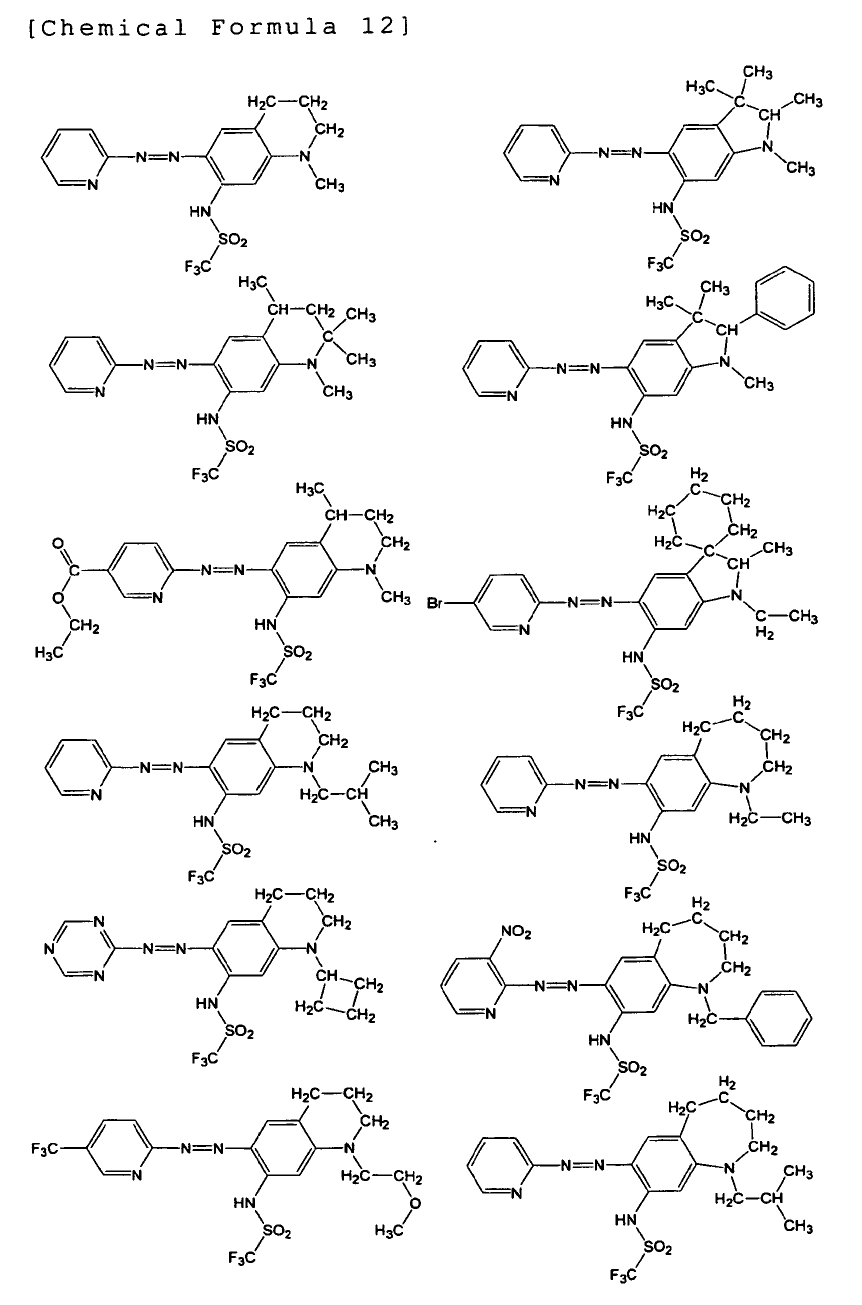

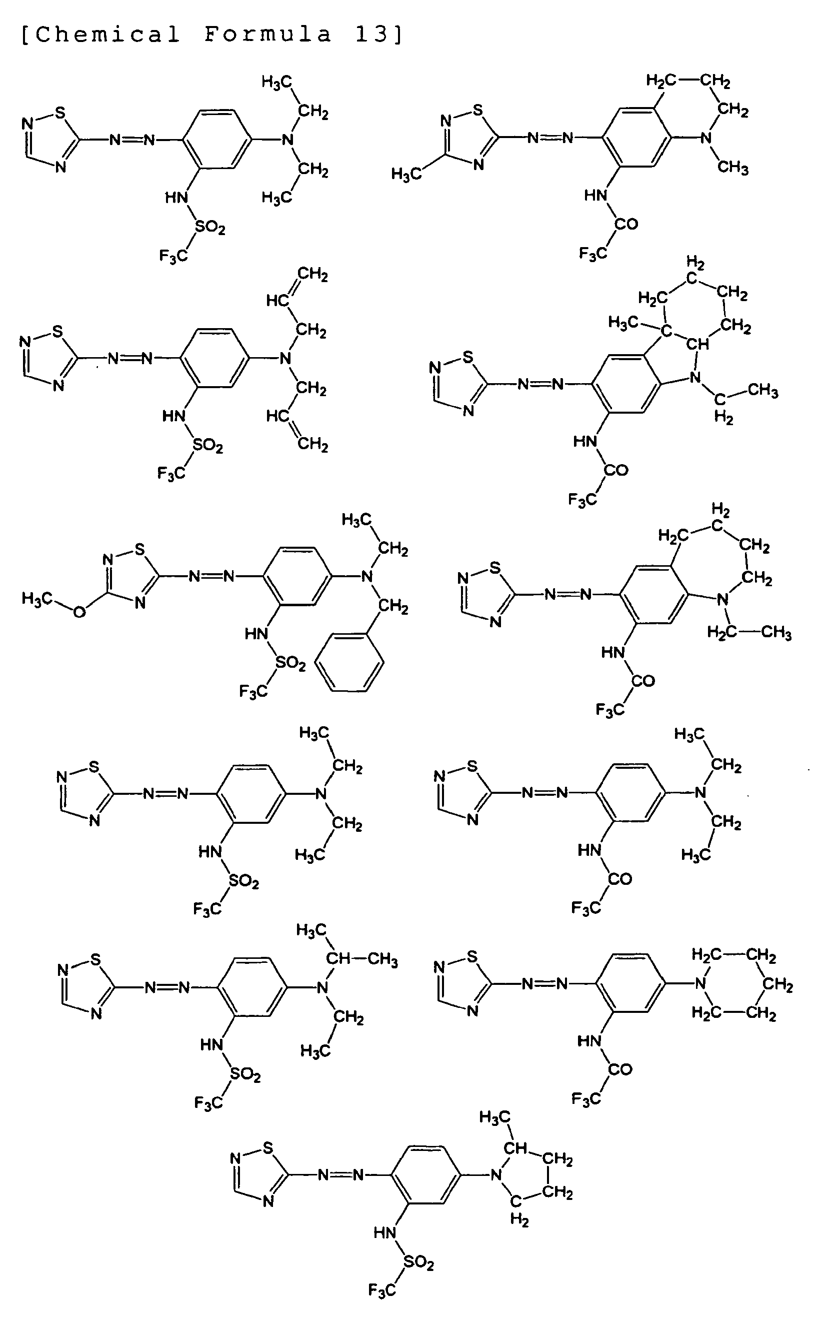

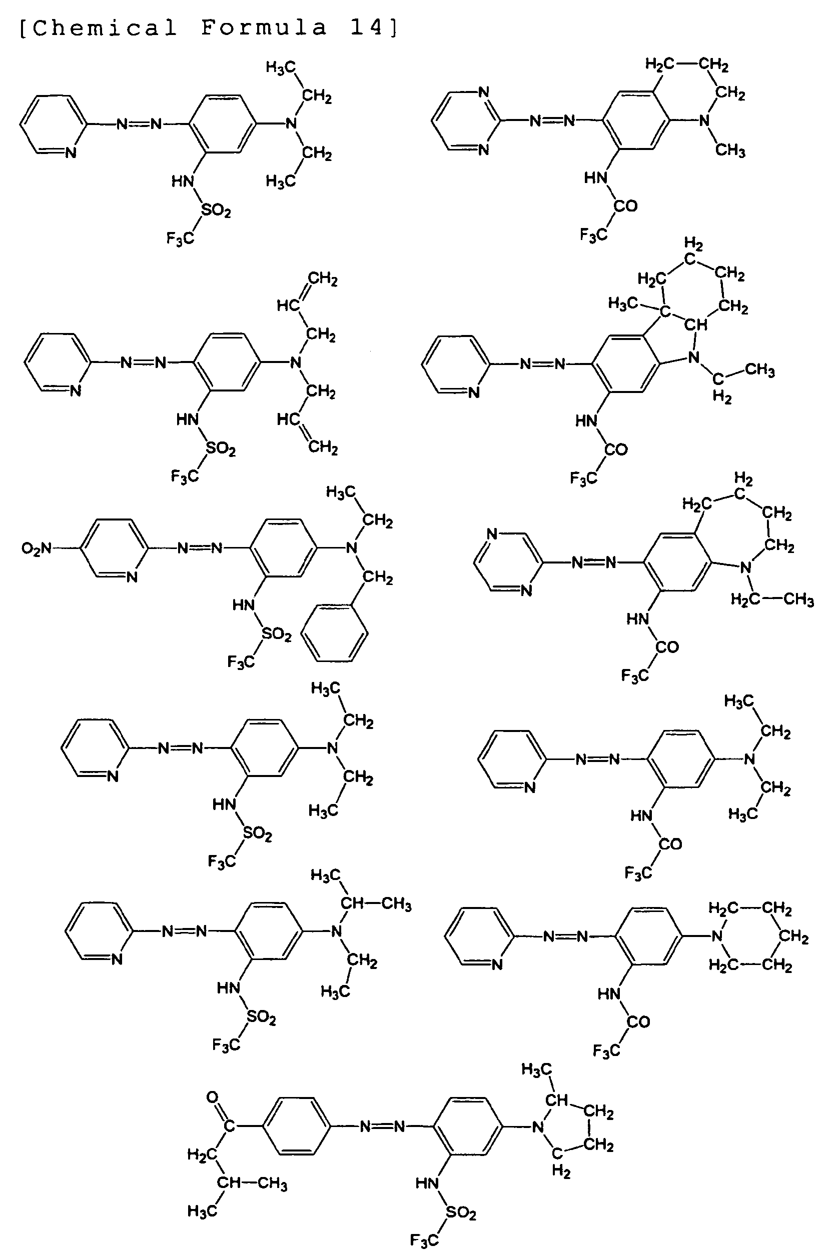

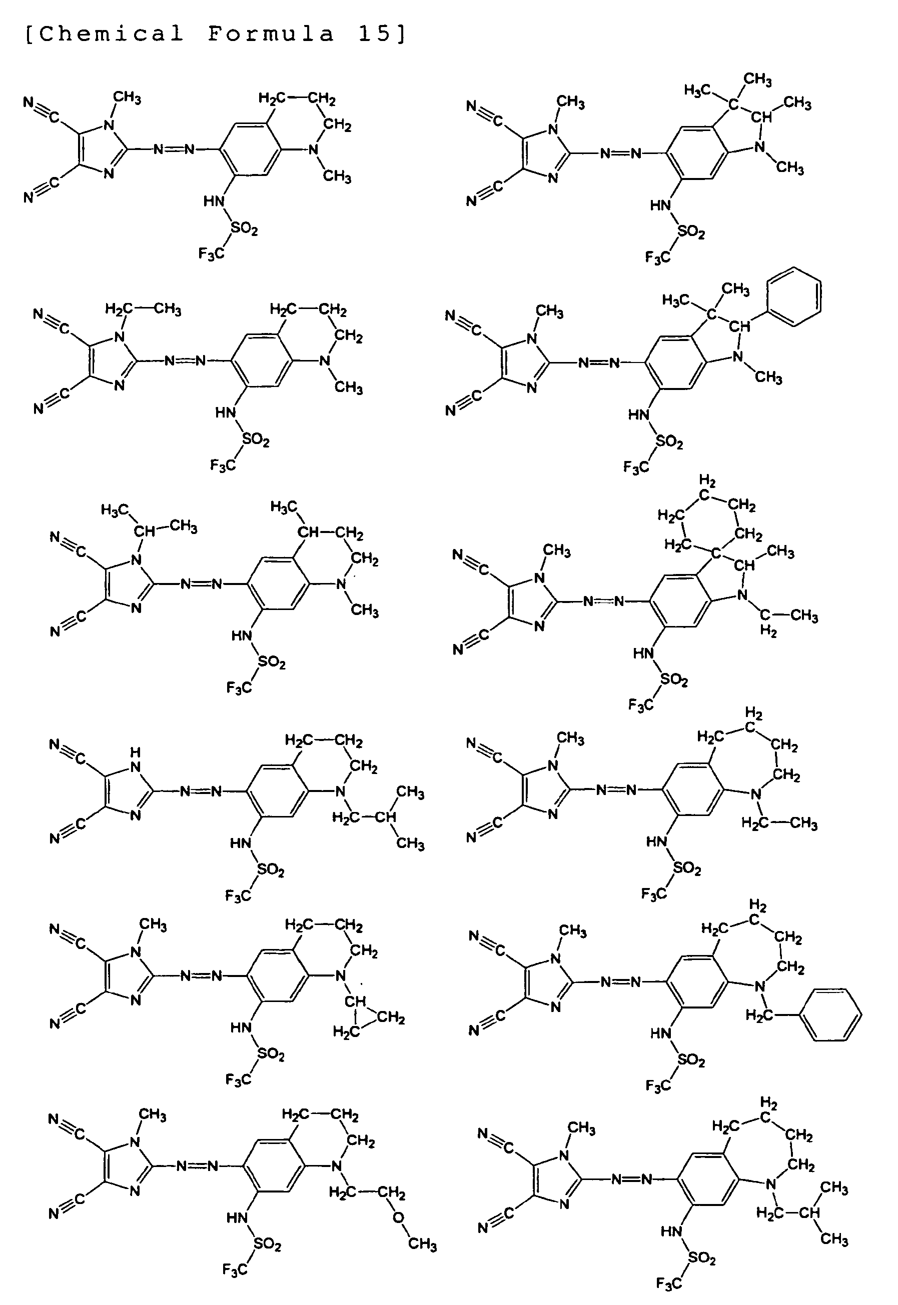

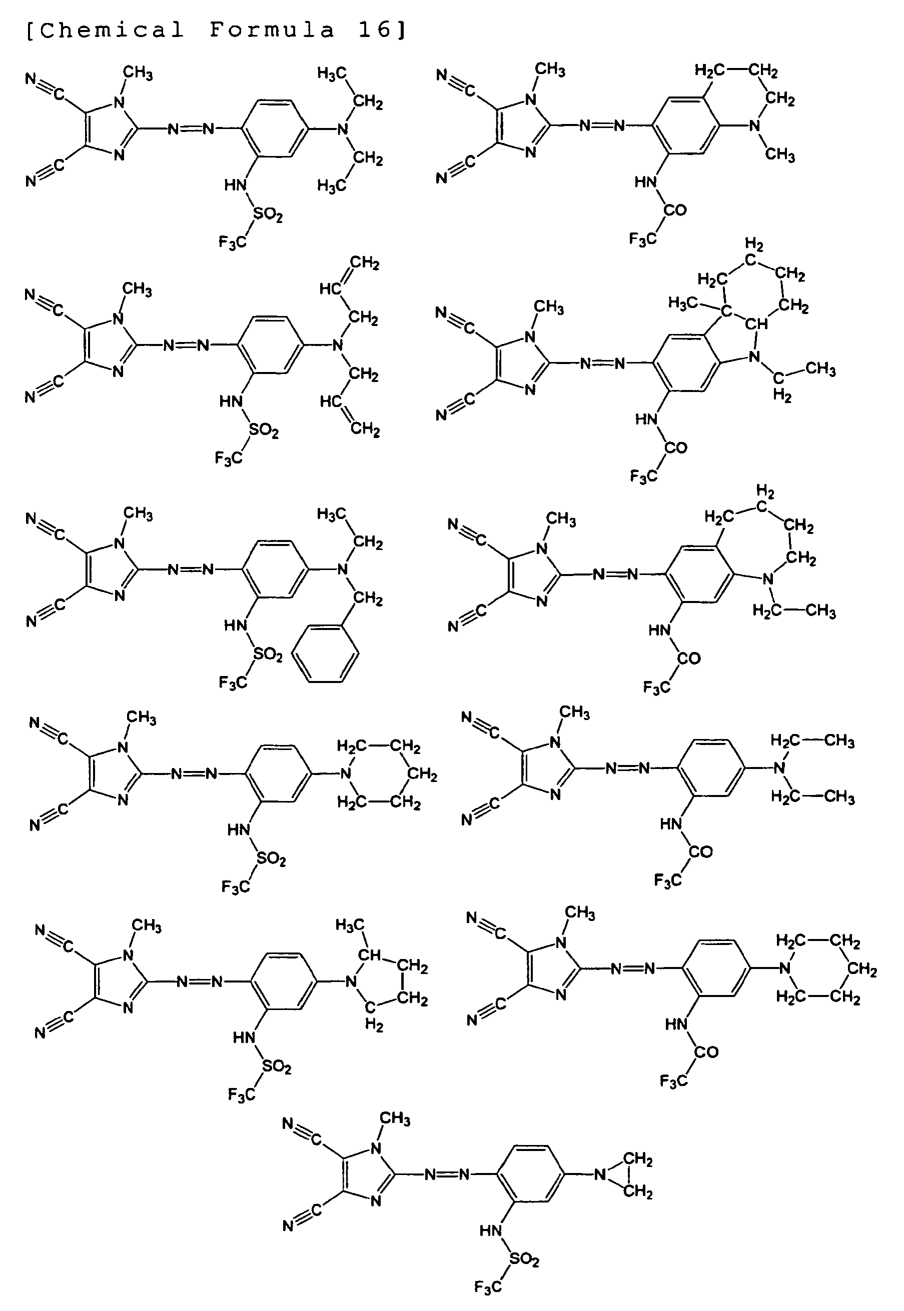

The above-mentioned azo dye coumpounds structured so that -N⁻(SO₂CF₃) group or -N⁻COCF₃ group, respectively obtained from -NHSO₂CF₃ group or -NHCOCF₃ group of coupler component by eliminating active hydrogen therefrom, is bonded to a central metal ion by coordinate bond. Incidentally, such azo dye compounds are also preferable as ligands of host dyes.

It is thought that the reason why additives having such azo dye compounds as ligands are preferable is because a very strong absorption band can be obtained in the visible part of the spectrum. This means that the light energy can be transmitted from host dye to additive more efficiently, as mentioned earlier.

For the same reason, ligands of additives having such structure as to induce transmission of energy from host dye easily are also preferable. Seen in this light, it is sometimes preferable that host dye also has ligands of the above-mentioned additives.

On the other hand, the present invention can be seen as an additive for a recording layer of an optical recording medium, characterized in that it has a compound represented by general formula (III) or (IV) below as ligand.
Namely, one additive fo improving light resistance, of the present invention, is an azo metal-chelate dye additive comprising azo iron chelate dye (hereinafter, referred to as "azo iron chelate dye of the present invention" as needed). The azo iron chelate dye comprises two ligands, where active hydrogen contained in X is eliminated from an azo compound represented by general formula (III) below respectively, and Fe²⁺ wherein said azo iron chelate dye has, in a state of film or solution, one or more absorption maximums at wavelength ranges of 400 nm to 630 nm and 680 nm to 800 nm, respectively.

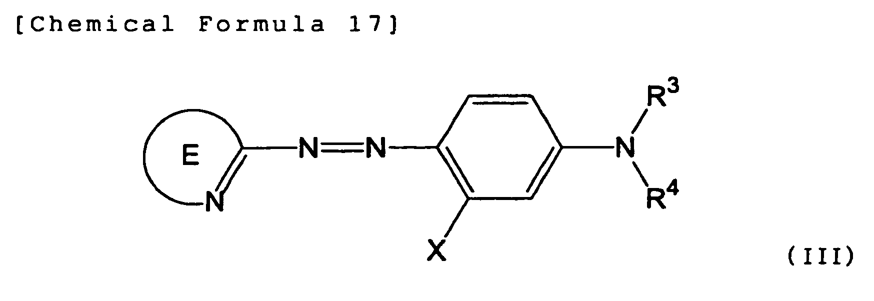

In general formula (III), ring *E* is an aromatic heterocycle, which may have a substituent. As examples can be cited such as thiazole, thiadiazole, imidazole, triazole, pyridine and pyrimidine. Of these, thiadiazole, imidazole and pyridine are preferable. When ring E has a substituent, the example of which can be cited alkyl group, aryl group, halogen atom, ester group, cyano group, nitro group, alkoxy group and alkylthio group. Of these, alkyl group, ester group and cyano group are preferable.

In general formula (III), *R³* and *R⁴* each represents, independently, an alkyl group, which may have a substituent. As examples can be cited methyl group, ethyl group and isobutyl group. Of these, ethyl group and isobutyl group are preferable. When *R³* and *R⁴* have a substituent, the example of which can be cited such as aryl group, alkoxy group, ester group and halogen atom.

In general formula (III), *R³* and *R⁴* may be connected to each other to form a ring. As examples can be cited such as aziridine, azetidin, pyrrolidine, piperidine, azepane, morpholine. Of these, pyrrolidine and piperidine are preferable.

In addition, in general formula (III), either one or both of *R³* and *R⁴* may be connected to a benzene ring to form 4 to 7 membered ring, which may be condensed to form a benzene ring. As examples can be cited such as indoline, tetrahydroquinoline, benzazepine and carbazole. Of these, indoline and tetrahydroquinoline are preferable.

In general formula (III), X is an organic group having active hydrogen. As examples can be cited such as sulfonamide group, carboxamido group, sulfone acid group, carboxylic acid group and hydroxyl group. Preferable are carboxamido group and sulfonamide group. Of these, sulfonamide group such as -NHSO₂CF₃ is particularly preferable because iron complex can be obtained stably.

In general formula (III), all of rings *E*, *X, R³* and *R⁴*, belonging to the two ligands, may be the same as or different from each other.

The molecular weight of the ligand represented by above general formula (III) per molecule is usually 100 or larger, preferable 300 or larger, usually 1000 or smaller and preferably 600 or smaller. It is not preferable that the molecular weight of the ligand is too small, because adjustable range of absorption wavelength, solubility or the like will be narrower. It is not preferable either that the molecular weight of a ligand is too large, because gram absorptivity will be smaller and thereby the optical characteristics will be worse.

For an azo metal-chelate dye additive comprising the above-mentioned azo iron chelate dye, use of a ligand of which recording characteristics is excellent, such as nickel-complex recording dye, is particularly preferable. More concretely, such examples as to be formerly cited as "examples of azo dye compound constituting ligands of an additive of the present invention" can be used. However, just for the use as an additive for improving light resistance, it is not necessary to think of the recording characteristics particularly.

Another additive for improving light resistance, of the present invention, is an azo metal-chelate dye additive, wherein the additive comprises two ligands, where active hydrogen contained in *X* is eliminated from an azo compound represented by general formula (IV) below respectively, and Co²⁺, and the additive has, in a state of film or solution, one or more absorption maximums at wavelength ranges of 400 nm to 630 nm and 680 nm to 800 nm respectively.

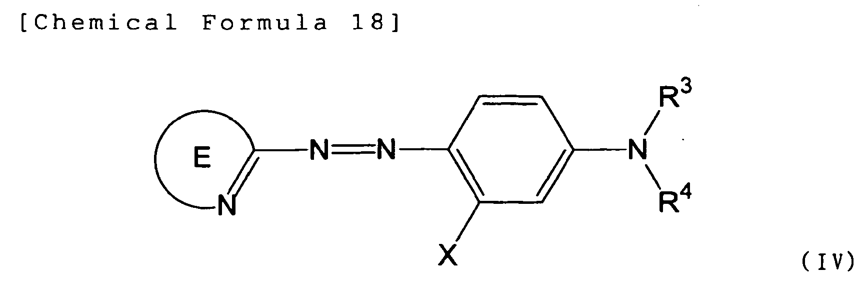

In this context, "absorption maximum at 680 nm or longer" of the present azo cobalt-chelate dye additive includes, in addition to a clear absorption maximum, so-called "absorption shoulder", where another absorption band is recognized to be contained within an absorption edge of the absorption band.

In general formula (IV), ring *E* is an aromatic heterocycle, which may have a substituent (the example thereof can be cited alkyl group, aryl group, halogen atom, ester group, cyano group, nitro group, alkoxy group and alkylthio group. Of these, alkyl group, ester group and cyano group are preferable).

In general formula (IV), *R*³ and *R*⁴ each represents, independently of each other, an alkyl group, which may have a substituent. As examples can be cited such as methyl group, ethyl group and isobutyl group. Of these, ethyl group and isobutyl group are preferable. When *R*³ and *R*⁴ have a substituent, the example of which can be cited aryl group, alkoxy group, ester group and halogen atom.

In general formula (IV) , *R*³ and *R⁴* may be connected to each other to form a ring. As examples can be cited such as aziridine, azetidin, pyrrolidine, piperidine, azepane, morpholine. Of these, pyrrolidine and piperidine are preferable.

In addition, in general formula (IV), either one or both of *R*³ and *R*⁴ may be connected to a benzene ring to form 4 to 7 membered ring, which may be condensed to form a benzene ring. As examples can be cited such as indoline, tetrahydroquinoline, benzazepine and carbazole. Of these, indoline and tetrahydroquinoline are preferable.

In general formula (IV), *X* is an organic group having active hydrogen. As examples can be cited such as sulfonamide group, carboxamido group, sulfone acid group, carboxylic acid group and hydroxyl group. Preferable are carboxamido group and sulfonamide group. Of these, sulfonamide group such as -NHSO₂ is particularly preferable because cobalt complex can be obtained stably.

In general formula (IV), all of rings *E*, *X, R³* and *R*⁴, belonging to the two ligands, may be the same as or different from each other.

The molecular weight of the ligand represented by above general formula (IV) is usually 100 or larger, preferable 300 or larger, usually 1000 or smaller and preferably 600 or smaller. It is not preferable that the molecular weight of the ligand is too small, because adjustable range of absorption wavelength, solubility or the like will be narrower. It is not preferable either that the molecular weight of a ligand is too large, because gram absorptivity will be smaller and thereby the optical characteristics will be worse.

The existence of the absorption maximum at 680 nm or longer, of an azo metal-chelate dye additive in which central metal ion is Co²⁺, sometimes depends on its kind of ligands, though the reason thereof in not exactly known. Preferable examples of ligands can be cited compounds shown below.

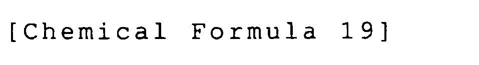

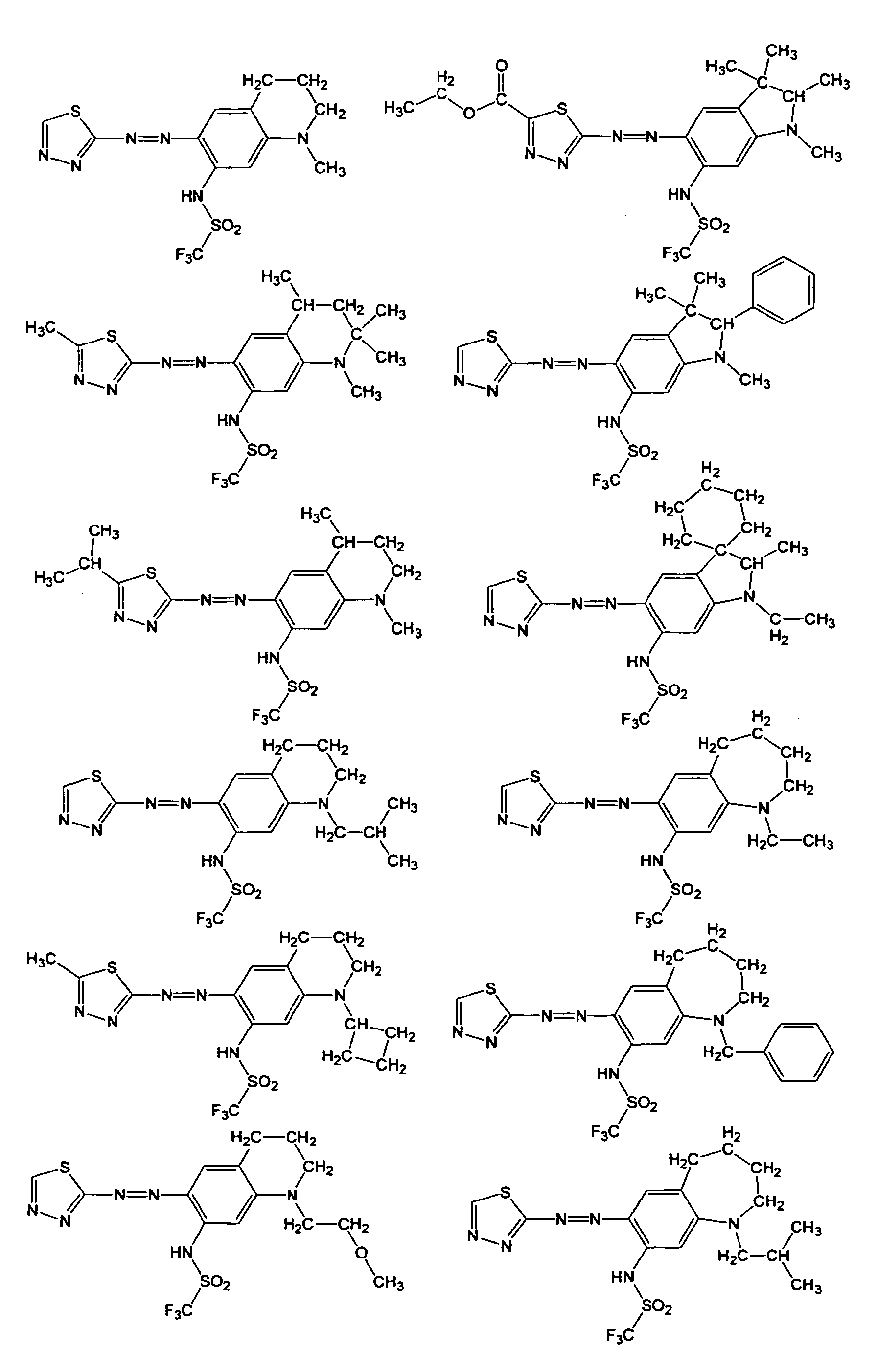

It is preferable that the additive of the present invention is contained with the concentration of 0.1 weight % or more and 50 weight % or less in the host dye of the recording layer, as described earlier. More concretely, the lower limit of the amount of the "additive" is usually 0.1 weight % and preferably 0.5 weight %. On the other hand, the upper limit of the amount is usually 50 weight %, preferably 40 weight % and more preferably 15 weight %. When the amount is within the above range, it is thought that the light resistance can be improved with recording characteristics being not very affected by the additive.

As described earlier, it is preferable that the recording layer contains the additive of the present invention and that, in the range of UV and visible absorption spectra (wavelength range of 400 nm to 800 nm), the single layer of the recording layer has an absorption maximum at wavelengths of 680 nm or longer in addition to the absorption maximum at wavelengths of 630 nm or shorter. This means that the recording layer contains an additive, in optimum quantity, which has an outstanding absorption maximum, such as an metal-chelate dye with Fe²⁺ as central metal ion, as already explained.

In order to decide, from the absorption spectrum of a recording layer containing an additive, the strength of the absorption of the absorption band of the additive itself at wavelengths of 680 nm or longer and the amount of such additive to be added, the *b*/*a* value should be calculated. Here, a represents absorbance of the base line of the absorption spectrum on the assumption that the absorption band does not exist, and *b* represents absorbance at wavelength of absorption maximum.

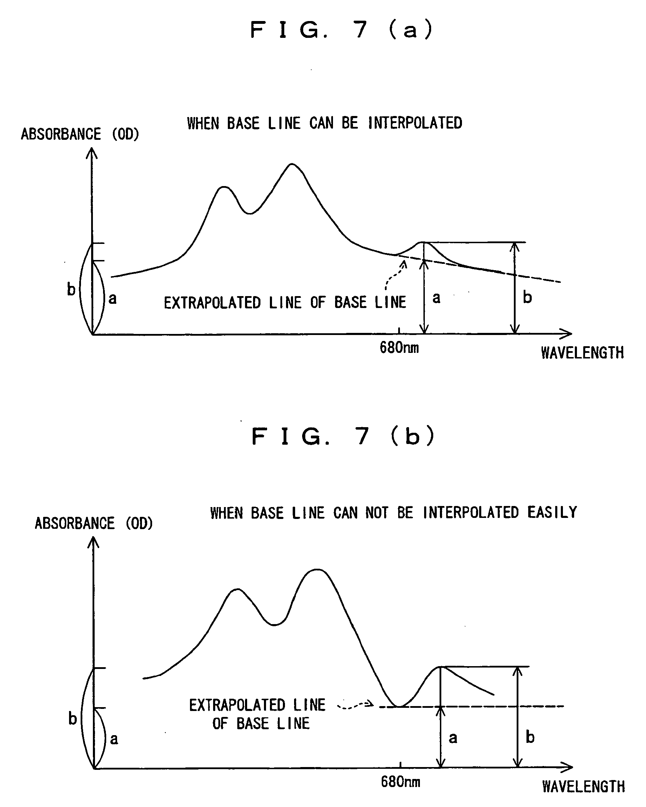

A method for calculating the *b*/*a* value from the absorption spectrum of a recording layer containing an additive will be explained below according to Figs. 7 (a) and 7(b).

Both Figs. 7(a) and 7(b) show the case in which an absorption maximum (namely, peak) exists at wavelength region of 680 nm or longer. Fig. 7(a) shows a case in which the base line declines smoothly either because the absorption band of the recording layer at longer wavelength side of 680 nm or longer, is much lower in absorbance than the absorption band at wavelength region of 630 nm or shorter or because the overlapping area of absorption edges of both absorption bands is not very wide. In such case, the base line can be interpolated by drawing an extrapolated line (dotted line in the Fig.) along with absorption spectra of both sides of the peak.

On the other hand, Fig. 7(b) shows a case in which the absorbance at the longer wavelength side of the peak is higher than or equivalent to that at shorter wavelength side. In such case, it is difficult to interpolate the base line with the above method. Therefore in this case, the absorbance at the spectrum where it is starting to rise in the shorter wavelength side of the peak is decided and then the extrapolated line is drawn as a straight line (dotted line in Fig. 7(b)) whose value is constant at the decided absorbance value.

As an example of the case in which an absorption spectrum as shown in Fig. 7(b) appears, can be cited a case where the absorption maximum of the additive at longer wavelength side of 680 nm or longer, is extremely stronger than that at wavelength region of 630 nm or shorter.

In the present invention, the case shown in Fig. 7(a) is more preferable than the case shown in Fig. 7(b) because, in the case of Fig. 7(a), the energy transmission as mentioned earlier can be done more efficiently.

Accordingly, when the *b*/*a* value is larger than 1, namely when an absorption band can be recognized, 5 even though it is weak, at longer wavelength side of 680 nm or longer in addition to the absorption maximum at wavelength region of 630 nm or shorter, more outstanding improvement effect in light resistance, of the recording layer containing an 0 organic dye which can make information be recorded or read by being irradiated with light having wavelength of 700 nm or shorter, can be realized. In order to realize a remarkable effect of adding the additive, the *b*/*a* value is more preferably 1.05 or larger and 5 much more preferably 1.1 or larger.

Meanwhile, the *b*/*a* value is preferably 1.5 or smaller. This is because the additive of the present invention does not necessary emphasize the recording characteristics as mentioned earlier and thereby it is preferable the additive is added in a moderate amount.

The detection of the additive of the present invention, having Fe²⁺ or Co²⁺ as central metal ion, can be carried out by the following Methods (1) to (4), for example.

### Method (1) :

The recording layer, cut from an optical disk containing a recording layer, is dissolved in a proper organic solvent, and then ion chromatography is performed for the solution obtained. At that time, the detection is carried out with ions being separated by mixing a coloring agent using a post-column. More concretely, the absorption region of each ion is widened by the coloring agent, and each of the ions are separated by the columns. Then each ion can be detected by the time occurring the peak. The intensity can also be detected at the same time.

On the other hand, the following Methods (2) to (4) can be carried out using a solid layer (namely, film) sample or solid (namely, dye powder) sample. In other words, these methods can be performed with dye extracted from a recording layer or a disk being an object, or with dye itself being an object.

### Method (2) (XAFS Method):

Each ion can be distinguished by the X-ray absorption spectrum of the above-mentioned sample. This is because each ion absorbs X-ray and is excited with its characteristic wavelength at region of higher energy side than its absorption edge, around 30 eV to 1 KeV.

### Method (3) (XPS Method):

The above samples are irradiated with X-ray. Then each ion can be distinguished because each ion has different kinetic energy distribution of the spectrum.

### Method (4) (Mossbauer Method):

This method is effective only for detection of iron ion. An absorption curve with position or width of resonance absorption, or Doppler velocity being horizontal axis, by the Doppler effect. Detection can be made by this method because bivalent and trivalent iron ions have different spectrum from each other.

As another example for distinguishing each ion, can be cited a method described in Trends in Analytical Chemistry, 24(3), 2005, pp. 192-198.

### [II. Embodiments of the Present Invention]

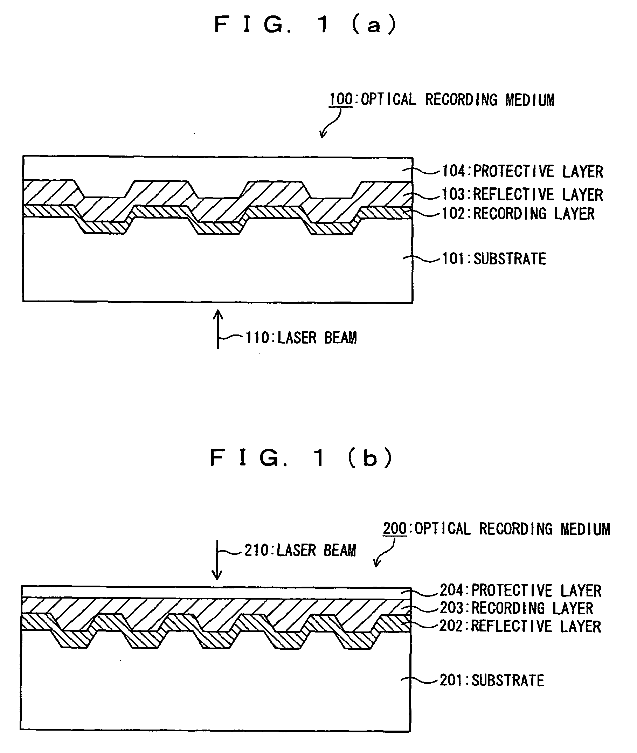

Embodiments of the present invention will be explained below according to Figs. 1(a), 1(b), 2(a), 2(b), 3(a) and 3(b). Each of Figs. 1(a), 1(b), 2(a), 2(b), 3(a) and 3(b) is a partial sectional view illustrating schematically an example of the layer structure of the optical recording medium 100 to 600 according to an embodiment of the present invention.

In the following description, in each of Figs. 1(a), 1(b), 2(a), 2(b), 3(a) and 3(b), directions of upside and downside are referred to as upside and downside of optical recording medium 100 to 600 respectively, and the corresponding surfaces of each layer, which are constituting optical recording medium 100 to 600, are referred to as upside surface and downside surface of each layer respectively, for convenience in explaining.

The optical recording medium of the present invention comprises at least a substrate, a recording layer and a reflective layer. As described earlier, the recording layer contains an organic dye which can make information be recorded or read by being irradiated with light having wavelength of 700 nm or shorter and an azo metal-chelate dye additive of which central metal ion is any one of Fe²⁺ and Co²⁺ (an additive of the present invention). It is possible to provide some other kinds of layers such as an undercoat layer and a protective layer, if necessary.

The first embodiment of the present invention will be described first.
Fig. 1(a) is a view illustrating schematically the layer structure of the optical recording medium of the first embodiment of the present invention. Optical recording medium 100, shown in Fig. 1(a), comprises a substrate 101 made of light-transmissible material, a recording layer 102 formed on substrate 101, a reflective layer 103 and a protective layer 104. Reflective layer 103 and protective layer 104 are formed on recording layer 102 in this order. Information is recorded in and read from this optical recording medium 100, by laser beam 110 irradiated from the side of substrate 101.
Each of the layers will be described below.

Basically, various materials can be used to form substrate 101 insofar as they are transparent to the wavelength of the recording beam and the reading beam. Concrete examples are: resins such as acrylic resins, methacrylic resins, polycarbonate resin, polyolefin resins (particularly, amorphous polyolefin), polyester resins, polystyrene resin, epoxy resin; and glass. It is also possible to provide a resin layer made from a radiation curing resin such as a light curing resin on the glass. Of those materials, polycarbonate resin, generally used in injection molding, is preferable from the viewpoint of high productivity, cost, low hygroscopicity or the like. From the viewpoint of chemical resistance, low hygroscopicity and the like, amorphous polyolefin is preferable. From the viewpoint of high-speed responsibility and the like, a glass substrate is preferable.

When substrate 101 is made of resin, or when a resin layer is formed on substrate 101 at the side touching the recording layer (namely, upper side), a guide groove or a pit used for guiding a recording/reading light can be formed on the upper surface thereof. The guide groove can be formed, for example, concentrically or spirally with respect to the center of optical recording medium 100.When the guide groove is formed spirally, the groove pitch is preferably about 0.2 µm to 0.8 µm in length.

Recording layer 102 is formed on the upside of substrate 101 directly or on the upside of an undercoat layer or the like formed on substrate 101 as needed. Recording layer 102 contains an organic dye (host dye) which can make information be recorded or read by being irradiated with light having wavelength of 700 nm or shorter and an azo metal-chelate dye additive of which central metal ion is any one of Fe²⁺ and Co²⁺ (an additive of the present invention). Both of the host dye and the additive of the present invention can be used either as a single one or as a mixture of more than one kind in any combination and in any ratio.

In recording layer 102, organic dyes such as benzophenone dye, phthalocyanine dye, naphthalocyanine dye, azo metal-chelate dye, squarylium dye, triarylmethane dye, merocyanine dye, azulenium dye, naphthoquinone dye, anthraquinone dye, indophenol dye, xanthene dye, oxazine dye and pyrylium dye, can also be contained, as additional dye other than the host dye and the additive of the present invention. Further, recording layer 102 can also contain, as required, a binder, a leveling agent, an antiforming agent and the like. These components can be used either as a single one or as a mixture of two or more kinds in any combination and in any ratio. However, the amount of these additional components used should be within such range as to preserve the high-speed or high-density recording characteristics, which is an object of the present invention.

As method of deposition of recording layer 102, there can be applied various thin film deposition methods generally performed such as vacuum evaporation, sputtering method, doctor blade method, cast method, spin coating, dipping method or the like. From the standpoint of mass productivity and cost, spin coating is preferable. Vacuum evaporation and the like are more preferable than a coating method because they can yield a recording layer 102 having uniform thickness. When the deposition is performed in spin coating, the rotation speed is preferably 500 to 15000 rpm. After the spin coating, a process of annealing or applying solvent vapor or the like may be performed, as the case may be.

When recording layer 102 is formed in a coating method such as doctor blade method, cast method, spin coating, dipping method, a coating liquid is prepared by dissolving the host dye, the additive of the present invention and other components used if necessary in a solvent. The obtained coating liquid is then applied on substrate 101 so as to form recording layer 102. The type of the coating solvent used for preparing the coating liquid is not limited, so long as it does not attack substrate 101 and has solubility in the host dye and the additive of the present invention to an extent that it can make a solution with a concentration of which absorption can be detected by a spectrophotometer. As concrete examples of the coating solvent can be cited: ketone alcohol type solvents such as diacetone alcohol, 3-hydroxy-3-methyl-2-butanone and the like; cellosolve type solvents such as methyl cellosolve, ethyl cellosolve and the like; acyclic hydrocarbon type solvents such as n-hexane, n-octane and the like; cyclic hydrocarbon type solvents such as cyclohexane, methylcyclohexane, ethylcyclohexane, dimethylcyclohexane, n-butylcyclohexane, tert-butylcyclohexane, cyclooctane and the like; perfluoroalkylalcohol type solvents such as tetrafluoropropanol, octafluoropentanol, hexafluorobutanol and the like; and hydroxy carboxylic acid ester type solvents such as methyl lactate, ethyl lactate, methyl 2-hydroxyisobutyric acid and the like.

On the other hand, in the case of vacuum evaporation, recording layer components such as other dyes, as required, and various additives are put in a crucible disposed inside a vacuum chamber, for example, and then the inside of the vacuum chamber is evacuated to about 10⁻² to 10⁻⁵ Pa by an appropriate vacuum pump. After that, the crucible is heated to vaporize the recording layer components, and the recording layer components are deposited on the substrate placed facing the crucible, whereby recording layer 102 is formed.

The film thickness of recording layer 102 is not specifically limited because the suited film thickness differs according to the recording method or the like. However, it is usually 1 nm or larger and preferably 5 nm or larger because at least a certain level of film thickness is necessary in order to enable recording. On the other hand, it is usually 300 nm or smaller, preferably 200 nm or smaller and more preferably 100 nm or smaller because too large film thickness may impair the excellent recording.

It is preferable that the extinction coefficient (imaginary part of complex refractive index) k of recording layer 102 at the wavelength of recording/reading light is usually 0.01 or larger and 0.6 or smaller. In addition, it is preferable that the refractive index (real part of complex refractive index) n of recording layer 102 at the wavelength of recording/reading light is usually 0.5 or larger and 3 or smaller.

Reflective layer 103 is formed on the upside of recording layer 102. The thickness of reflective layer 103 is preferably 30 nm or larger, more preferably 50 nm or larger, and preferably 300 nm or smaller, more preferably 200 nm or smaller. As material of reflective layer 103, it is possible to use, solely or in a form of alloy, metals having sufficiently high reflectance at a wavelength of the reading light such as Au, Al, Ag, Cu, Ti, Cr, Ni, Pt, Ta and Pd, for example. Among them, Au, Al and Ag are suitable for the material of reflective layer 103 because they have high reflectance.

In addition to containing these metals as main components, reflective layer 103 may contain other components. In this context, "main component" signifies a material of which rate of content is 50 % or more. As examples of other components than the main component can be cited metals and semimetals such as Mg, Se, Hf, V, Nb, Ru, W, Mn, Re, Fe, Co, Rh, Ir, Cu, Zn, Cd, Ga, In, Si, Ge, Te, Pb, Po, Sn, Bi, Ta, Ti, Pt, Pd and Nd. A material containing Ag as main component is particularly preferable because of its low cost, a resultant high reflectance and a beautiful white ground color when a print accepting layer to be described later is further provided. For example, an alloy that contains Ag as main component and contains 0.1 to 5 atomic % of at least one element selected from the group consisting of Au Pd, Pt, Cu and Nd is preferable, because of its high reflectance, high durability, high sensitivity and low cost. Concrete examples of such alloy can be cited AgPdCu, AgCuAu, AgCuAuNd and AgCuNd. As other material than metals for reflective layer 103, it is possible to use a multilayer made by stacking thin films having low refractive index and high refractive index alternately.

As method for forming reflective layer 103 can be cited, for example, sputtering, ion plating, chemical vapor deposition, vacuum evaporation, etc. It is possible to provide a known inorganic or organic intermediate layer or an adhesive layer on the upside of substrate 101 or downside of reflective layer 103 in order to improve the reflectance, recording characteristics, adhesiveness and so forth.

Protective layer 104 is formed on the upside of reflective layer 103. The material of protective layer 104 is not specifically limited but any material is available so long as it can protect reflective layer 103 from the external force. More concretely, as an organic material of protective layer 104, available are a thermal plastic resin, a thermosetting resin, an electron beam curable resin, an ultraviolet ray-curable resin and the like. As an inorganic material of protective layer 104, available are silicon oxide, silicon nitride, magnesium fluoride (MgF₂), tin dioxide (SnO₂) and the like. These materials can be used either as a single one or as a mixture of two or more kinds.

When a thermal plastic resin, a thermal setting resin or the like is used, protective layer 104 can be formed by dissolving the resin in an appropriate resolvent to prepare a coating liquid, applying the prepared coating liquid on reflective layer 103, and then drying it.
In the case of an ultraviolet ray-curable resin, protective layer 104 can be formed by applying, on reflective layer 103, the resin itself or a coating liquid prepared by dissolving the resin in an appropriate resolvent, and radiating UV light to cure the resin or the coating liquid. As ultraviolet ray-curable resin used, available are acrylic resins such as urethane acrylate, epoxy acrylate, polyester acrylate, etc.

As method of forming protective layer 104, available are, as is the case with recording layer 102, coating methods such as spin coating, cast method and the like, sputtering, chemical vapor deposition, etc. Among these, spin coating is preferable.

The film thickness of protective layer 104 is usually 0.1 µm or larger and preferably 3 µm or larger because at least a certain level of thickness is necessary in order for the layer to function as protective cover. On the other hand, it is usually 100 µm or smaller and preferably 30 µm or smaller because even with too large film thickness the effect obtained will not at all be more advantageous, and what is worse, time or cost to form protective layer 104 may increase.
Protective layer 104 may be formed both as a single layer and as a multilayer.

Next, the second embodiment of the present invention will be explained.
Fig. 1(b) is a view illustrating schematically the layer structure of the optical recording medium of the second embodiment of the present invention. Optical recording medium 200, shown in Fig. 1(b), comprises a substrate 201 made of light-transmissible material, a reflective layer 202 formed on substrate 201, a recording layer 203 and a protective layer 204. Recording layer 203 and protective layer 204 are formed on reflective layer 202 in this order. Information is recorded in and read from this optical recording medium 200, by laser beam 210 irradiated from the side of protective layer 204.
Each of the layers will be described below.

Substrate 201 is basically the same as substrate 101 in the first embodiment, but it is not necessary transparent. Therefore, an opaque resin, ceramic, metal (including alloy) or the like can be used as its material in addition to the materials cited earlier in the explanation for substrate 101.

Reflective layer 202 and recording layer 203 are the same as reflective layer 103 and recording layer 102 in the first embodiment respectively.

Protective layer 204 can be formed by bonding with an adhesive using a film or sheet-shaped material having thickness of 50 µm to 100 µm. Otherwise, it can be formed by stacking the same material as protective layer 104 of the first embodiment through the repeated processes each of which consists of applying a coating liquid for deposition and solidifying or drying it. The thickness of protective layer 204 is preferably in the optically allowable range considering focus depth of the pickup or the like. Usually, the thickness as a whole is about 100 µm ± 3 µm.

As a means of increasing the recording density of optical recording medium 100, 200, can be cited a method of increasing the numerical aperture of the objective lens. This enables a micronization of the optical spot of light condensation on the information recording surface. However, when the numerical aperture of the objective lens is increased, the aberration of the optical spot tends to be larger due to the warping of optical recording medium 100, 200 or the like while being irradiated with laser beam for recording and reading, which may result in unstable gain of good recording/reading signals.

The thicker the film thickness of the transparent layers where the laser beam pass through such as substrate 101 and protective layer 204, the larger such aberration tends to be. Therefore, substrate 101 and protective layer 204 are preferably as thin as possible in order to make the aberration smaller. However, it is usually necessary that substrate 101 has a certain degree of thickness in order to assure the strength of optical recording medium 100. Therefore, in such case, it is preferable to adopt the layer structure of optical recording medium 200 (namely, the basic layer structure consisting of substrate 201, reflective layer 202, recording layer 203 and protective layer 204). Protective layer 204 of optical recording medium 200 can be more easily made thinner than substrate 101 of optical recording medium 100, which leads to the advantage of optical recording medium 200 as high-density recording medium.

In this regard, even the aberration of optical recording medium 100 (having a basic layer structure consisting of substrate 101, recording layer 102, reflective layer 103 and protective layer 104) can be made smaller, by means of decreasing the thickness of the transparent substrate 101, where the laser beam for recording and reading pass through, to about 50 µm to 300 µm.

Next, the third to sixth embodiments of the present invention will be described.

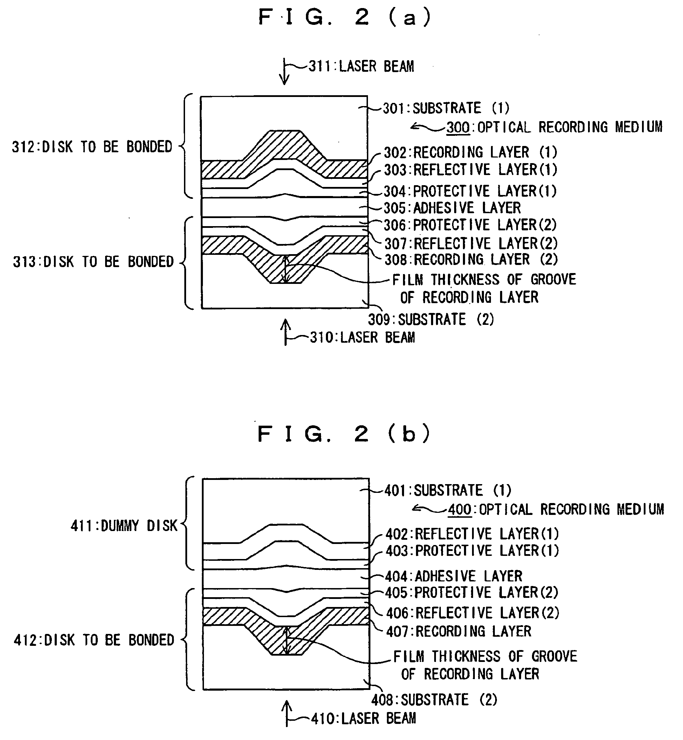

Fig. 2(a) is a view illustrating schematically the layer structure of the optical recording medium of the third embodiment of the present invention. Optical recording medium 300, shown in Fig. 2(a), has a layer structure comprising a substrate (1) 301, a recording layer (1) 302, a reflective layer (1) 303, a protective layer (1) 304, an adhesive layer 305, a protective layer (2) 306, a reflective layer (2) 307, a recording layer (2) 308 and a substrate (2) 309, laminated in this order. Information is recorded in and read from this optical recording medium 300, at recording layer (1) 302 by laser beam 310 irradiated from the side of substrate (2) 309 and at recording layer (2) 308 by laser beam 311 irradiated from the side of substrate (1) 301.

Optical recording medium 300 is formed by bonding together disk to be bonded 312 and disk to be bonded 313 using adhesive layer 305, with protective layer (1) 304 of disk 312 and protective layer (2) 306 of disk 313 facing to each other. Disk to be bonded 312 has a structure comprising substrate (1) 301, recording layer (1) 302, reflective layer (1) 303 and protective layer (1) 304, laminated in this order. Disk to be bonded 313 has a structure comprising substrate (2) 309, recording layer (2) 308, reflective layer (2) 307 and protective layer (2) 306, laminated in this order.

Among the above layers of optical recording medium 300, substrate (1) 301 and substrate (2) 309 are basically the same as substrate 101 in the first embodiment.
Recording layer (1) 302 and recording layer (2) 308 are basically the same as recording layer 102 in the first embodiment.
Reflective layer (1) 303 and reflective layer (2) 307 are basically the same as reflective layer 104 in the first embodiment.
Protective layer (1) 304 and protective layer (2) 306 are basically the same as protective layer 204 in the second embodiment.
For adhesive layer 305, any material can be used insofar as it is transparent and can bond together protective layer (1) 304 of disk to be bonded 312 and protective layer (2) 306 of disk to be bonded 313. More concretely, materials the same as protective layer 104 of the first embodiment or protective layer 204 of the second embodiment can be used.

Fig. 2(b) is a view illustrating schematically the layer structure of the optical recording medium of the fourth embodiment of the present invention. Optical recording medium 400, shown in Fig. 2(b), has a layer structure comprising a substrate (1) 401, a reflective layer (1) 402, a protective layer (1) 403, an adhesive layer 404, a protective layer (2) 405, a reflective layer (2) 406, a recording layer 407 and a substrate (2) 408, laminated in this order. Information is recorded in and read from this optical recording medium 400 at recording layer 207, by laser beam 410 irradiated from the side of substrate (2) 408.

Optical recording medium 400 is formed by bonding together dummy disk 411 and disk to be bonded 412 using adhesive layer 404, with protective layer (1) 403 of dummy disk 411 and protective layer (2) 405 of disk 412 facing to each other. Dummy disk 411 has a structure comprising substrate (1) 401, reflective layer (1) 402, protective layer (1) 403, laminated in this order. Disk to be bonded 412 has a structure comprising substrate (2) 408, recording layer 407, reflective layer (2) 406 and protective layer (2) 405, laminated in this order.
Protective layer (1) 403 and protective layer (2) 405 can be omitted. In such case, disks 411 and 412 can be bonded together using adhesive layer 404 with reflective layer (1) 402 and reflective layer (2) 406 facing to each other.

Among the above layers of optical recording medium 400, substrate (1) 401 and substrate (2) 408 are basically the same as substrate 101 in the first embodiment. However, substrate (1) 401 is not necessary transparent, and therefore, materials the same as ones for substrate 201 of the second embodiment can be used for substrate (1) 401. It is not necessary to form a guide groove or a pit for the recording/reading light on substrate (1) 401.
Reflective layer (1) 402 and reflective layer (2) 406 are basically the same as reflective layer 104 in the first embodiment.
Protective layer (1) 403 and protective layer (2) 405 are basically the same as protective layer 204 in the second embodiment.
Adhesive layer 404 is basically the same as adhesive layer 305 in the third embodiment.
Recording layer 407 is basically the same as recording layer 102 in the first embodiment.

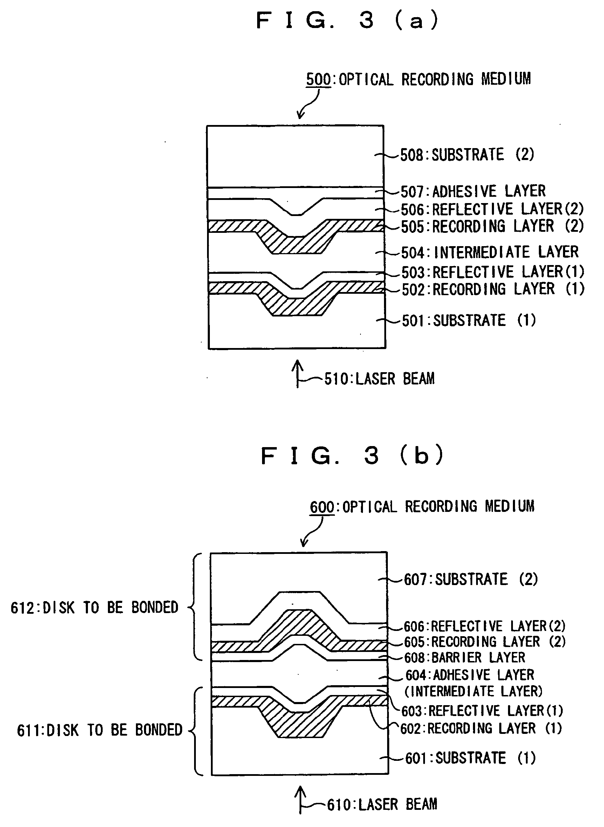

Fig. 3(a) is a view illustrating schematically the layer structure of the optical recording medium of the fifth embodiment of the present invention. Optical recording medium 500, shown in Fig. 3(a), has a layer structure comprising a substrate (1) 501, a recording layer (1) 502, a reflective layer (1) 503, an intermediate layer 504, a recording layer (2) 505, a reflective layer (2) 506, an adhesive layer 507 and a substrate (2) 508, laminated in this order. Information is recorded in and read from this optical recording medium 500, at recording layer (1) 502 and at recording layer (2) 505 by laser beam 510 irradiated from the side of substrate (1) 501.

Optical recording medium 500 is formed by stacking substrate (1) 501, recording layer (1) 502, reflective layer (1) 503, intermediate layer 504, recording layer (2) 505, reflective layer (2) 506 in this order and then bonding together reflective layer (2) 506 and substrate (2) 508, facing to each other, by adhesive layer 507. In this regard, a guide groove, a pit and the like for the light beam, used to record and read information in and from recording layer (2) 505, are usually formed on the surface of intermediate layer 504, before recording layer (2) 505 is formed on intermediate layer 504. As method of forming a guide groove, pit and the like on the surface of intermediate layer 504 can be cited a method using a resin stamper (refer to Japanese Patent Application Laid-Open (Kokai) No. 2003-67990, for example).

Among the above layers of optical recording medium 500, substrate (1) 501 and substrate (2) 508 are basically the same as substrate 101 in the first embodiment. However, substrate (2) 508 is not necessary transparent, and therefore, materials which are the same as those for substrate 201 of the second embodiment can be used for substrate (2) 508. It is not necessary to form a guide groove or a pit for the recording/reading light on substrate (2) 508.
Recording layer (1) 502 and recording layer (2) 505 are basically the same as recording layer 102 in the first embodiment.

Reflective layer (1) 503 and reflective layer (2) 506 are basically the same as reflective layer 104 in the first embodiment. However, reflective layer (1) 503 is usually so constructed as to allow transmission of the recording/reading light for recording layer (2) 505. Therefore, in order to assure 40 % or more of the transmittance of the recording/reading wavelength for recording layer (2) 505, the film thickness of reflective layer (1) 503 is usually 50 nm or smaller, preferably 30 nm or smaller and more preferably 25 nm or smaller. However, in order to prevent recording layer (1) 502 from leaking to intermediate layer 504 and to assure sufficient reflectance, the film thickness of reflective layer (1) 503 is usually 3 nm or larger and preferably 5 nm or larger.
For intermediate layer 504, transparent, and similar materials to those for adhesive layer 305 of the third embodiment can be used.
Adhesive layer 507 is basically the same as adhesive layer 305 in the third embodiment.

Fig. 3(b) is a view illustrating schematically the layer structure of the optical recording medium of the sixth embodiment of the present invention. Optical recording medium 600, shown in Fig. 3(b), has a layer structure comprising a substrate (1) 601, a recording layer (1) 602, a reflective layer (1) 603, an adhesive layer (intermediate layer) 604, a barrier layer 608, a recording layer (2) 605, a reflective layer (2) 606 and a substrate (2) 607, laminated in this order. Information is recorded in and read from this optical recording medium 600, at recording layer (1) 602 and at recording layer (2) 605 by laser beam 610 irradiated from the side of substrate (2) 607.

Optical recording medium 600 is formed by bonding together disk to be bonded 611 and disk to be bonded 612 using adhesive layer (intermediate layer) 604, with reflective layer (1) 603 of disk 611 and barrier layer 608 of disk 612 facing to each other. Disk to be bonded 611 has a structure comprising substrate (1) 601, recording layer (1) 602 and reflective layer (1) 603, laminated in this order. Disk to be bonded 612 has a structure comprising substrate (2) 607, reflective layer (2) 606, recording layer (2) 605 and barrier layer 608, laminated in this order.

Among the above layers of optical recording medium 600, substrate (1) 601 is basically the same as substrate 101 in the first embodiment. Substrate (2) 607 is basically the same as substrate 201 in the second embodiment.
Recording layer (1) 602 and recording layer (2) 605 are basically the same as recording layer 102 in the first embodiment.
Reflective layer (1) 603 and reflective layer (2) 606 are basically the same as reflective layer 104 in the first embodiment. However, reflective layer (1) 603 is usually so constructed as to allow transmission of the recording/reading light for recording layer (2) 605. Therefore, reflective layer (1) 603 is usually formed in the same manner as reflective layer (1) 503 in the fifth embodiment.
For adhesive layer (intermediate layer) 604, the same materials as those for adhesive layer 504 of the fifth embodiment can be used.

Barrier layer 608 is provided for preventing recording layer (2) 605 from leaking to adhesive layer (intermediate layer) 604. As material for barrier layer 608 can be cited for example, though it has not specific restriction, simple substances of Si, Zn, Ag, Al, Ti, Sn, W, Cu, Ge, Mn, Sb and Zr, or compounds of them (such as oxide, nitride and sulfide). Because these materials can be selected to be used as appropriate, by considering various physicochemical properties such as melting point and rigidity, they can be used either as a single one or as a mixture of more than one kind.

It is preferable that barrier layer 608 allows the laser beam used for recording and reading to pass through usually in 70 % or more, and preferably in 90 % or more. Accordingly, the thickness of barrier layer 608 is usually 1 nm or larger, preferably 2 nm or larger, more preferably 3 nm or larger, and usually 80 nm or smaller, preferably 50 nm or smaller, more preferably 20 nm or smaller.

In optical recording medium 100, 200, 300, 400, 500, 600 according to each of the embodiments of the present invention described above, it is preferable that the laser beam used for recording and reading information has wavelength which is as short as possible for the purpose of high-density recording. Particularly, the laser beam having a wavelength of 350 nm to 680 nm is preferable. As typical examples of such laser beam can be cited, laser beams having center wavelengths of approximately 405 nm, 410 nm, 515 nm, 635 nm, 660 nm and 680 nm (at this point, "approximately" means to allow wavelength shift of about ± 5 nm).

As wavelength used for high-speed recording, red semiconductor laser with wavelength of around 660 nm has been provided generally. When this wavelength is used, it is preferable that the absorption maximum closest to the absorption maximum of the host dye in the state of film, namely 660 nm, is in the range of 580 nm to 620 nm.

For reading information, it is most preferable to use wavelength of 405 nm, as it is advantageous for higher density and provided generally as a practical semiconductor laser wavelength. When this wavelength is used, it is preferable that the maximum absorption wavelength of the host dye is in the range of 300 nm to 600 nm.

In order for optical recording medium 100, 200, 300, 400, 500, 600 according to each of the embodiments of the present invention to be recorded with information, a laser beam, focused to approximately 0.4 µm to 0.6 µm, is irradiated onto recording layer (including recording layer (1) and recording layer (2)) 102, 202, 302, 308, 407, 502, 505, 602, 605 (from such direction as explained in each embodiment). The portion of each recording layer 102, 202, 302, 308, 407, 502, 505, 602, 605 where the laser beam is irradiated is changed in optical characteristics, owing to thermal deformation such as decomposition, heat generation and fusion, and to change in refractive index, which are induced by the absorption of energy of the laser beam.

On the other hand, in order for the information recorded on recording layer 102, 202, 302, 308, 407, 502, 505, 602, 605 to be read, a laser beam, having lower level of energy though, is irradiated again onto recording layer 102, 202, 302, 308, 407, 502, 505, 602, 605 (usually from the same direction as during recording). Information is reproduced by reading the difference of quantities of reflected lights from portion where its optical characteristics changed (namely, portion where information is recorded) and from portion where its optical characteristics is not changed, of recording layer 102, 202, 302, 308, 407, 502, 505, 602, 605.

Various modifications can be added to the above-described structure of optical recording medium 100, 200, 300, 400, 500, 600. For example, adding other layer to the above-described layers, omitting a part of the above-described layers, making a part of the above-described layers divided into plural layers or changing the lamination order of the above-described layers can be performed, without departing from the scope of the invention.

More concretely, a layer such as ultraviolet ray-curable resin layer and inorganic thin layer can be formed by deposition, after forming each of the above-mentioned layers, on the surface through which the recording/reading beam comes in, for the purpose of surface protection or preventing the adherence of foreign substance or the like. Further, a print accepting layer, on which writing or printing is possible with various printers such as ink jet printer, thermal printer and the like, or with various writing tools, may be put on the surface that is not a surface through which the recording/reading beam comes in.

### Example

Next, the present invention will be further described in detail by way of examples. It is to be understood that the present invention is by no means limited by the following examples insofar as they do not depart from the scope of the invention.

### [Example Group 1: Synthesis of Azo Metal-Chelate Dye (Additive)]

Azo metal-chelate dye additives to be used as additives in each of the following Example Groups are synthesized by the following procedures.

In the following description, a ligand originating from an azo compound is represented with the number of the corresponding azo compound, as needed. For example, a ligand originating from azo compound (I-1) is represented as "ligand (I-1)".

In addition, in the following description, an azo metal-chelate dye additive is represented by the number of its ligand, together with the atomic symbol of its metal ion, as needed. For example, an azo metal-chelate dye additive comprising two ligands (I-1) and a bivalent iron ion is represented as "(I-1)₂(Fe²⁺) dye additive".

Further, ligands appended with numbers including the same Roman numbers, such as ligand (I-1), ligand (I-2) and ligand (I-A), show ligands which are thought to have common basic skeletons and therefore have similar solo characteristics to that of each other.

### [Synthetic Example 1: Synthesis of (I-1)₂(Fe²⁺) Dye Additive]

2.63 g of azo compound (I-1) represented by the structural formula shown below was dissolved in 100 ml of THF (tetrahydrofuran), and then the residue thereof was removed by filtration. Separately, 0.69 g of iron (II) chloride tetrahydrate was dissolved in 10 ml of methanol and the residue thereof was removed by filtration, after which the obtained solution was dropped in the THF solution of the previously-obtained azo compound (I-1). Subsequently, 90 ml of water was further dropped in it, and the deposited crystals were filtrated out, washed by THF, water and methanol in this order, and dried. By this procedure, 1.99 g of the intended compound ((bivalent) iron dye additive with ligand (I-1): (I-1)₂(Fe²⁺) dye additive) represented by the structural formula shown below was obtained.

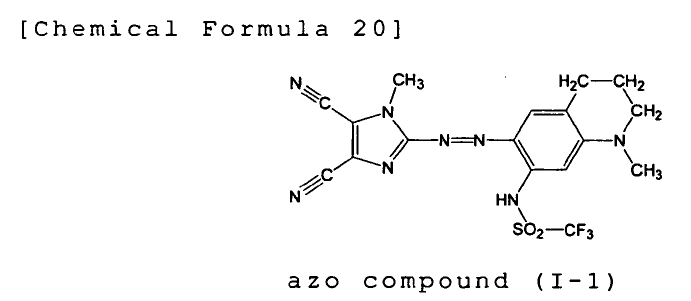

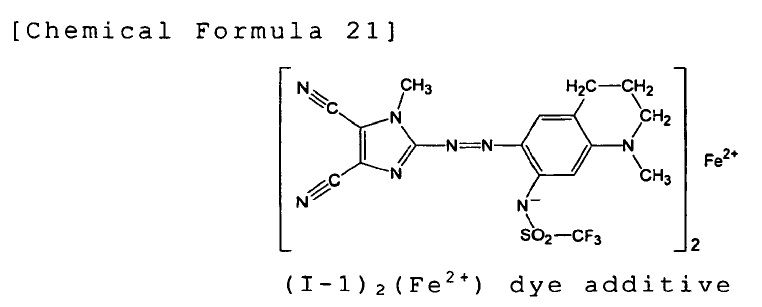

The absorption maximum wavelength of the obtained (I-1)₂(Fe²⁺) dye additive in chloroform was 558 nm, and the gram absorption coefficient of the same additive was 75.

### [Synthetic Example 2: Synthesis of (II-2)₂(Fe²⁺) Dye Additive]

2.00 g of azo compound (II-2) represented by the structural formula shown below was dissolved in 70 ml of THF, and then the residue thereof was removed by filtration. Separately, 0.53 g of iron (II) chloride tetrahydrate was dissolved in 7 ml of methanol and the residue thereof was removed by filtration, after which the obtained solution was dropped in the THF solution of the previously-obtained azo compound (II-2). Subsequently, 70 ml of methanol was further dropped in it, and the deposited crystals were filtrated out, washed by THF and methanol in this order, and dried. By this procedure, 1.12 g of the intended compound ((bivalent) iron dye additive with ligand (II-2): (II-2)₂(Fe²⁺) dye additive) represented by the structural formula shown below was obtained.

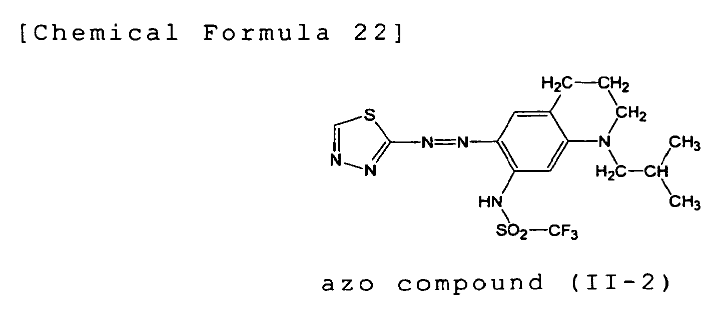

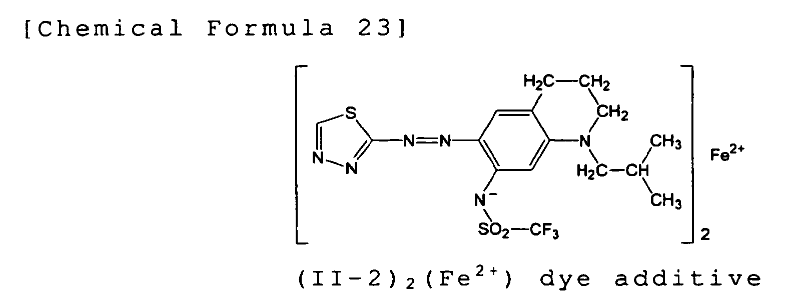

The absorption maximum wavelength of the obtained (II-2)₂(Fe²⁺) dye additive in chloroform was 741 nm, and the gram absorptivity of the same additive was 64.

### [Synthetic Example 3: Synthesis of (I-A)₂(Fe²⁺) Dye Additive]

1.05 g of azo compound (I-A) represented by the structural formula shown below was dissolved in a mixed solvent consisting of 30 ml of THF and 30 ml of DMF (N,N-dimethylformamide), and then the residue thereof was removed by filtration. Separately, 0.27 g of iron (II) chloride tetrahydrate was dissolved in 4 ml of methanol and the residue thereof was removed by filtration, after which the obtained solution was dropped in the THF/DMF solution of the previously-obtained azo compound (I-A). Subsequently, 60 ml of water was further dropped in it, and the deposited crystals were filtrated out, washed by THF, water and methanol in this order, and dried. By this procedure, 0.38 g of the intended compound ((bivalent) iron dye additive with ligand (I-A): (I-A)₂(Fe²⁺) dye additive) represented by the structural formula shown below was obtained.

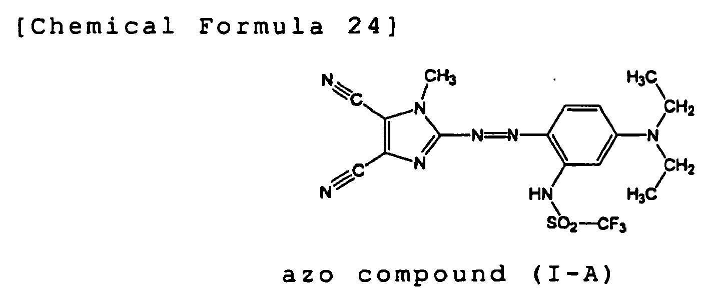

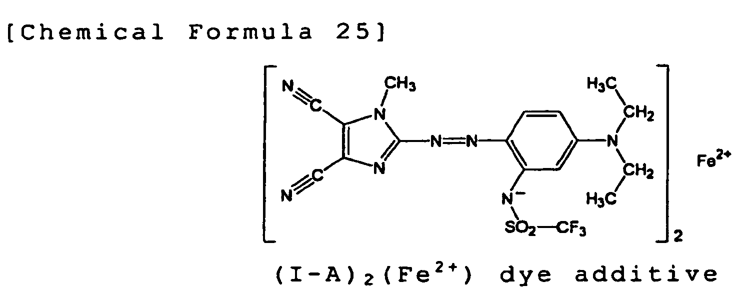

The absorption maximum wavelength of the obtained (I-A)₂(Fe²⁺) dye additive in chloroform was 564 nm, and the gram absorptivity of the same additive was 83.

### [Synthetic Example 4: Synthesis of (II-2)₂(Cu²⁺) Dye Additive] (not in accordance with the invention)

2.00 g of azo compound (II-2) represented by the structural formula shown below was dissolved in 30 ml of THF, and then the residue thereof was removed by filtration. Separately, 0.49 g of copper (II) chloride was dissolved in 5 ml of methanol and the residue thereof was removed by filtration, after which the obtained solution was dropped in the THF solution of the previously-obtained azo compound (II-2). Subsequently, the deposited crystals were filtrated out, washed by THF, water and methanol in this order, and dried. By this procedure, 1.90 g of the intended compound ((bivalent) copper dye additive with ligand (II-2): (II-2)₂(Cu²⁺) dye additive) represented by the structural formula shown below was obtained.

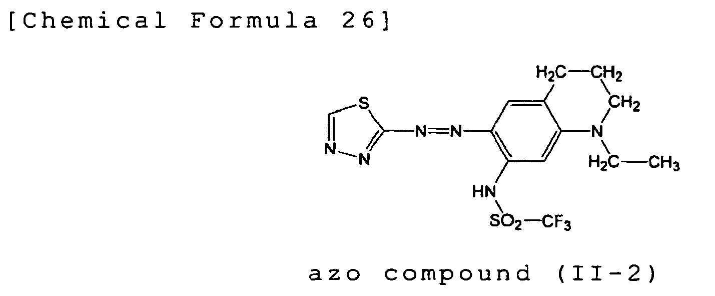

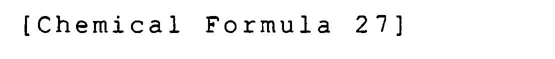

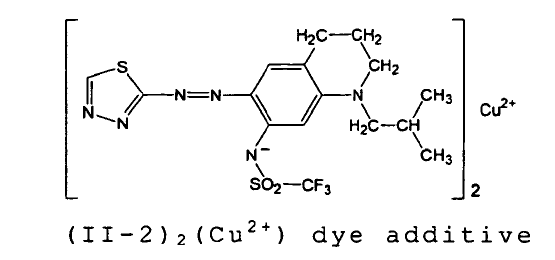

The absorption maximum wavelength of the obtained (II-2)₂(Cu²⁺) dye additive in chloroform was 586 nm, and the gram absorptivity of the same additive was 117.

### [Synthetic Example 5: Synthesis of (II-2)₂(Co²⁺) Dye Additive]

2.00 g of azo compound (II-2) described above was dissolved in 26 ml of THF, and then the residue thereof was removed by filtration. Separately, 0.67 g of cobalt (II) acetate tetrahydrate was dissolved in 7 ml of methanol and the residue thereof was removed by filtration, after which the obtained solution was dropped in the previously-obtained azo solution. Subsequently, 20 ml of methanol was further dropped in it, and the deposited crystals were filtrated out, washed by methanol, and dried. By this procedure, 1.88 g of the intended compound ((bivalent) cobalt dye additive with ligand (II-2): (II-2)₂(Co²⁺) dye additive) represented by the structural formula shown below was obtained.

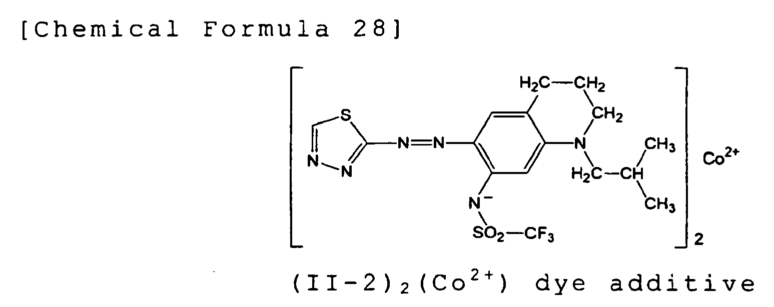

The absorption maximum wavelength of the obtained (II-2)₂(Co²⁺) dye additive in chloroform was 556 nm, and the gram absorptivity of the same additive was 80.

### [Comparative Synthetic Example 1: Synthesis of (II-1)₂(Ni²⁺) Dye Additive]

5.58 g of azo compound (II-1) described above was dissolved in 610 ml of THF, and then the residue thereof was removed by filtration. Separately, 1.98 g of nickel (II) acetate tetrahydrate was dissolved in 28 ml of methanol and the residue thereof was removed by filtration, after which the obtained solution was dropped in the THF solution of the previously-obtained azo compound (II-1). Subsequently, 327 ml of water was further dropped in it, and the deposited crystals were filtrated out, washed by THF, water and methanol in this order, and dried. By this procedure, 5.29 g of the intended compound ((bivalent) nickel dye additive with ligand (II-1): (II-1)₂(Ni²⁺) dye additive) represented by the structural formula shown below was obtained.

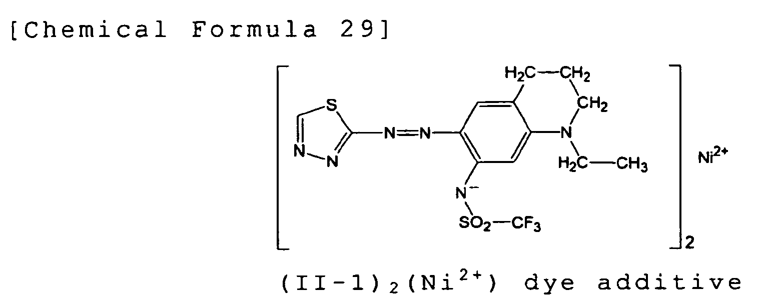

The absorption maximum wavelength of the obtained (II-1)₂(Ni²⁺) dye additive in chloroform was 587 nm, and the gram absorptivity of the same additive was 139.

### [Example Group 2: Evaluation of Single Layer of Additive]

### [Preparation of Sample]

Azo metal-chelate dye additives (1) to (17) shown in the following Tables 1 to 4 were used as additives.

### [Table 1]

**Table 1: Structure of Additives 1**

| No. | Ligand | Central Metal Ion | Structural Formula |
|---|---|---|---|
| (1)* | (I-1) | Ni²⁺ | 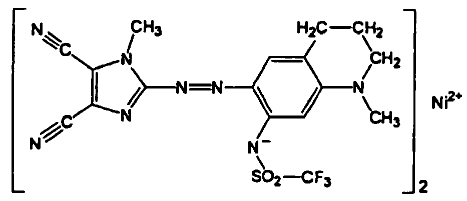 |
| (2) | (I-1) | Fe²⁺ | 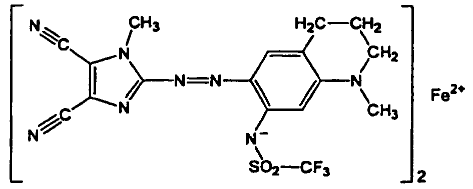 |
| (3)* | (I-1) | Co²⁺ | 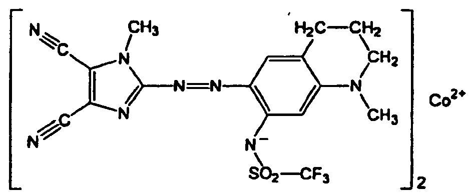 |
| (4)* | (I-2) | Co Cu²⁺ | 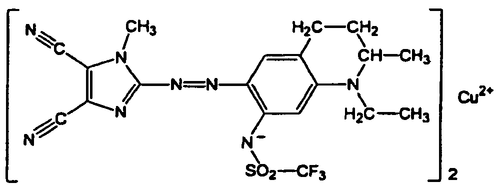 |
| (5) | (I-A) | Fe²⁺ | 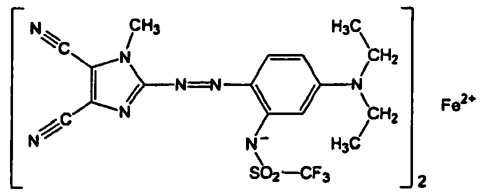 |

| | | | |
|---|---|---|---|
| * Comparative Sample | | | |

### [Table 2]

**Table 2: Structure of Additives 2**

| No. | Ligand | Central Metal Ion | Structural Formula |
|---|---|---|---|
| (6)* | (II-1) | Ni²⁺ | 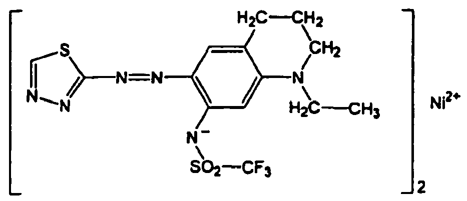 |
| (7) | (II-2) | Fe²⁺ | 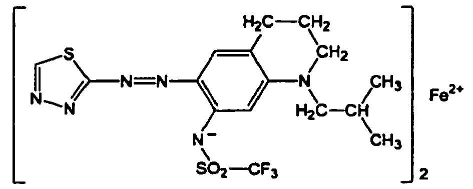 |
| (8) | (II-2) | Co²⁺ | 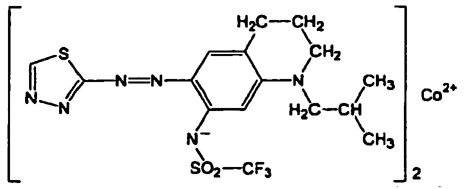 |
| (9)* | (II- 2) | Cu²⁺ | 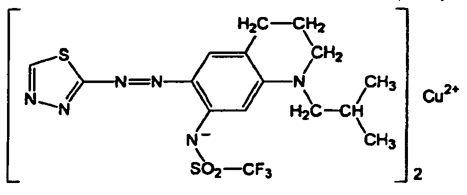 |

| | | | |
|---|---|---|---|
| * Comparative Sample | | | |

### [Table 3]

**Table 3: Structure of Additives 3**

| No. | Ligand | Central Metal Ion | Structural Formula |
|---|---|---|---|
| (10)* | (III) | Co²⁺ | 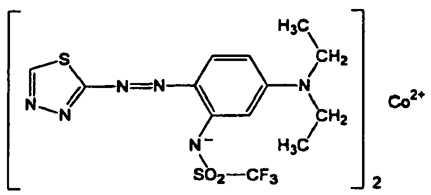 |
| (11) | (IV-1) | Fe²⁺ | 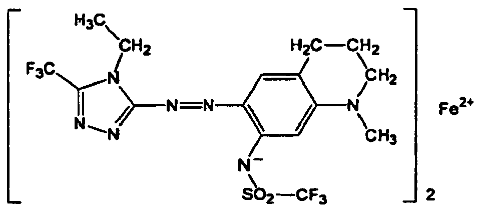 |
| (12) | (IV-2) | Fe²⁺ | 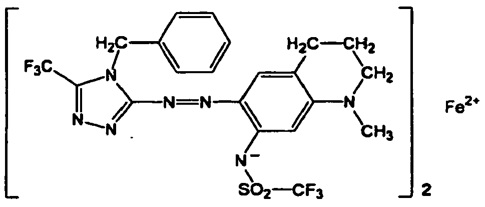 |
| (13) | (V) | Fe²⁺ | 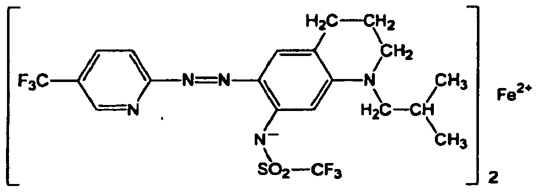 |

| | | | |
|---|---|---|---|
| * Comparative Sample | | | |

### [Table 4]

**Table 4: Structure of Additives 4**

| No. | Ligand | Central Metal Ion | Structural Formula |
|---|---|---|---|
| (14) | (VII) | Fe²⁺ | 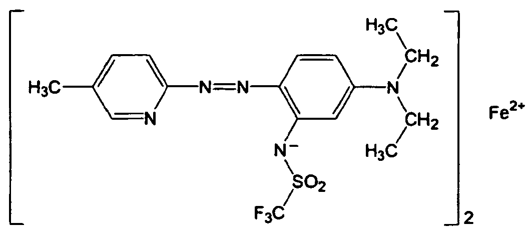 |
| (15) | (VIII) | Fe²⁺ | 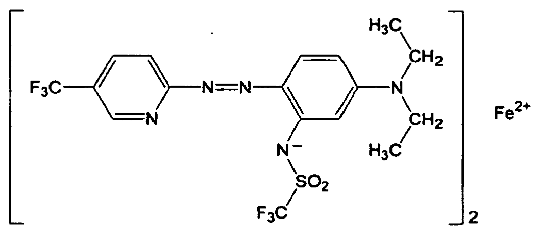 |
| (16) | (IX) | Fe²⁺ | 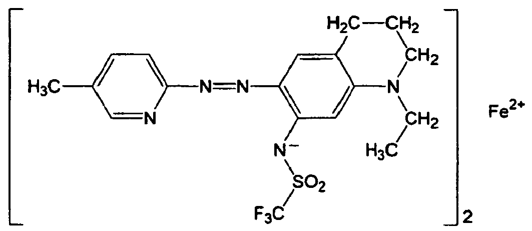 |
| (17) | (X) | Fe²⁺ | 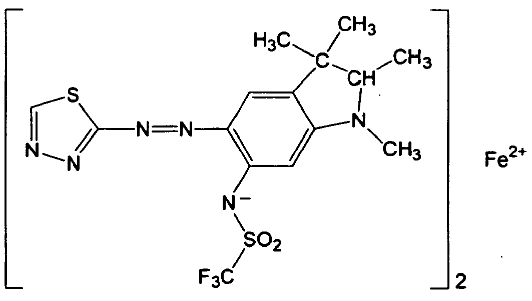 |

20 mg of each additive (1) to (17) shown in the above Tables 1 to 4 was dissolved in 2 g of TFP (2,2,3,3,-tetrafluoro-1-propanol) and dispersed by an ultrasonic wave at 45 °C for 60 min. After standing to cool, the obtained dispersion liquid was filtrated, if possible, with a filter of 0.2 µm. Subsequently, the liquid was applied onto a mirrored-surface substrate having thickness of 0.6 mm by means of spin coating for 3 minutes at rotation speed of 800 rpm, and then dried at 80 °C. By this procedure, a single layer sample of each additive was prepared.

### [Measurement of Absorption Spectrum]

The absorption spectrum at wavelength range of 400 nm to 800 nm was measured with air being the reference by radiating a sample beam from the side of the substrate of each single layer sample of the additive, which was cut off in an appropriate small piece. The measurement was carried out by a spectrophotometer U-3300 (Hitachi Seisakujo) in the absorbance mode at wavelength scan speed of 300 nm/min, sampling period of 0.5 nm.

### [Light Resistance Test (Measurement of Retention Rate of Dye)]

Each single layer sample of the additive, which was cut off in an appropriate small piece, was irradiated with Xe lamp (550 W/m², black panel temperature of 63 °C) for 40 hours by a light resistance testing machine SUNTEST XLS+ (Toyo Seiki). Absorbance I₀ and absorbance I₁ of the absorption maximums before and after radiation of the above-mentioned Xe lamp respectively were measured. The retention rate of dye of each additive was decided as the value calculated by (I₁/I₀) × 100 (%), which was used as the indication of light resistance. The larger the value of the retention rate of dye, the light resistance is thought to be excellent.

### [Results and Evaluations]

The results of absorption maximums and retention rates of dye of single layer samples of each additive (1) to (17) obtained by the above-described procedure are shown in Table 5 and Table 6 below.

### [Table 5]

**Table 5: Result 1 of single film samples of additives**

| Additive | | | Absorption maximum wavelength at 400 nm to 800 nm* | Retention Rate of Dye (%) |
|---|---|---|---|---|
| No. | Ligand | Central Metal Ion | | |
| (1)# | (I-1) | Ni²⁺ | 547.7 (85.7), 598 (100) | 79.8 |
| (6)# | (II-1) | Ni²⁺ | 558.4 (77.3), 607.5 (100) | 90.3 |
| (4)# | (I-2) | Cu²⁺ | 554.6 (85.5), 602 (100) | 91.3 |
| (9)# | (II-2) | Cu²⁺ | 562.7 (86.1), 609 (100) | 87.4 |
| (3)# | (I-1) | Co²⁺ | 553 (91.9), 605 (100) | 96.3 |
| (8) | (II-2) | Co²⁺ | 571.8 (100), 607.8 (96.0), 681.3 (57.2) | 95.2 |
| (10)# | (III) | Co²⁺ | 587.9 (98.8), 636 (100) | 99.1 |
| (2) | (I-1) | Fe²⁺ | 539.6 (95.9), 577.2 (100), 727.5 (51.2) | 89.2 |
| (7) | (II-2) | Fe²⁺ | 532.6 (88.3). 584.2 (85.1), 754.4 (100) (85.1), | 90.3 |
| (11) | (IV-1) | Fe²⁺ | 516.0 (89.3), 545.5 (100), 706.0 (28.1), | 84.6 |
| (13) | (V) | Fe²⁺ | 531.5 (74.5), 576.1 (1000), 754.4 (81.2) (100), | 86.9 |
| (5) | (I-A) | Fe²⁺ | 535.3 (93.7), 573.4 (100), 722.7 (53.0) | 92.3 |
| (12) | IV-2 | Fe²⁺ | 549.3 (87.8), 589.5 (100) 716.8 (24.5) | 67.9 |

| | | | | |
|---|---|---|---|---|
| * Relative intensities when absorbance of an absorption peak representing the largest absorbance (i.e., main absorption band) is assumed to be 100 are shown in parentheses. # Comparative Sample | | | | |

### [Table 6]

**Table 6: Result 1 of single film samples of additives**

| Additive | | | Absorption maximum wavelength at 400 nm to 800 nm* | Retention Rate of Dye (%) |
|---|---|---|---|---|
| No. | Ligand | Central Metal Ion | | |
| (14) | (VII) | Fe²⁺ | 539.1 (100), 509.0 (85.6), 701.2 (65.2), 410.2 (28.8) | 95.5 |
| (15) | (VIII) | Fe²⁺ | 570.2 (100), 532.6 (79.4), 741.5 (72.5), 420.9 (25.6) | 95 |
| (16) | (IX) | Fe²⁺ | 549.3 (100), 513. 3 (80.7), 713.02 (74.1), 406.1 (31.4) | 86.1 |
| (17) | (X) | Fe²⁺ | 521. 3 (89.8), 580.4 (82.9), 742.6 (100) | 95.2 |

| | | | | |
|---|---|---|---|---|
| *Relative intensities when absorbance of an absorption peak representing the largest absorbance (i.e., main absorption band) is assumed to be 100 are shown in parentheses. | | | | |

Tables 5 and 6 show that additives having Co²⁺ as central metal ion have often the absorption band with large absorbance (sometimes referred to as main absorption band) at longer wavelength area than additives having Ni²⁺ as central metal ion. In addition, Tables 5 and 6 show that additives having Fe²⁺ as central metal ion has often an absorption band at wavelength area of 680 nm or longer.

For example, when the main absorption band wavelengths of additives having ligand (I-1) are compared, it is 605 nm for the additive having Co²⁺ as central metal ion (additive (3)), while it is 598 nm for the additive having Ni²⁺ as central metal ion (additive (1)). Meanwhile, the additive having Fe²⁺ as central metal ion (additive (2)) has rather short main absorption band wavelength, 577.2 nm, but it has also rather strong absorption band at 727.5 nm.

When the additives having ligands (II-1) and (II-2) are compared, the additive having Ni²⁺ as central metal ion after chelating (additive (6)) has the main absorption band at wavelength of 607.5 nm, while the additive having Cu²⁺ as central metal ion after chelating (additive (9)) has the main absorption band at wavelength of 609 nm. In this regard, ligands (II-1) and (II-2) have substantiality the same contribution to absorption when they are not chelating. The additive having Co²⁺ as central metal ion (additive (8)) has very strong absorption bands at wavelength of 571.8 nm and 607.8 nm, as well as rather strong absorption band at wavelength of 681.3 nm. The additive having Fe²⁺ as central metal ion (additive (7)) has the main absorption band at long wavelength area, 754.4 nm, but it has also strong absorption band at much shorter wavelength area, 584.2 nm.

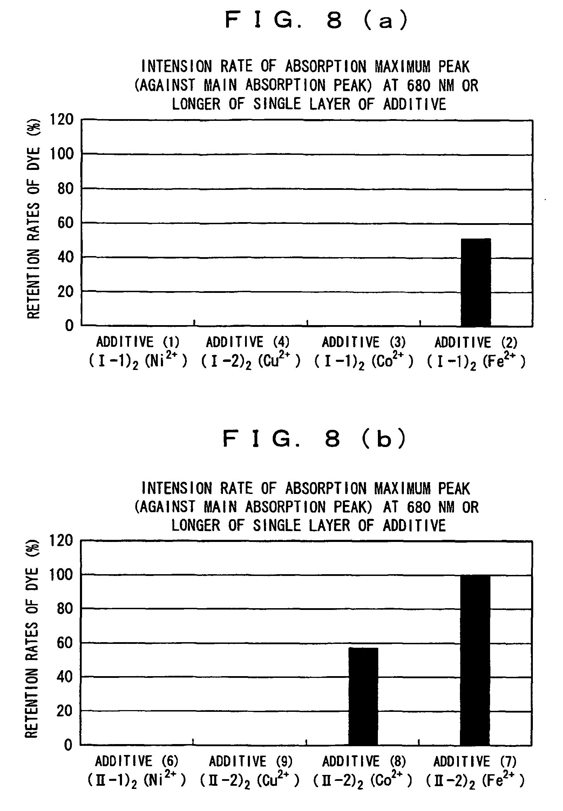

Figs. 8(a) and 8(b) are graphs showing intensity ratios of absorption band which is 680 nm or longer against main absorption band, of each single layer of additive. Figs. 8(a) and 8(b) show that, when a comparison about central metal ions are made, Co²⁺ and Fe²⁺ having a certain type of azo dye compound as ligands has an absorption band at wavelength area of 680 nm or longer, unlike Ni²⁺ and Cu²⁺.

Fig. 11 is a graph showing retention rates of dye for single layers of each additive (1) to (13) in Table 5, with respect to each central metal ion. Fig. 11 shows that, as described earlier, there is no difference in light resistance between additives themselves, insofar as they have Ni²⁺, Cu²⁺, Co²⁺ or Fe²⁺ as central metal ions.

### [Example Group 3 (1): Evaluation 1 of Recording Layer]

### [Preparation of Recording Layer Sample]

Recording layer samples were prepared by the following procedure. An azo metal-chelate dye (dye A) represented by the following structural formula was used as host dye. Additives (1) to (13) shown in Tables 1 to 3 cited above were used as additives.

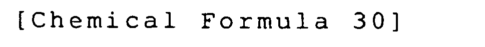

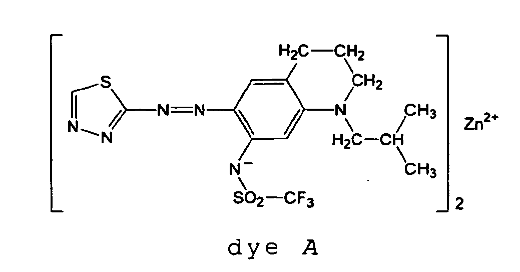

20 mg of host dye (dye A) and 2 mg of each additive were dissolved in 2 g of TFP and dispersed by an ultrasonic wave at 45 °C for 60 minutes. After standing to cool, the obtained dispersion liquid was filtrated, if possible, with a filter of 0.2 µm. Subsequently, the liquid was applied onto a mirrored-surface substrate having thickness of 0.6 mm by means of spin coating for 3 minutes at rotation speed of 800 rpm, and then dried at 80 °C. By this procedure, recording layer samples containing the host dye and each additive were prepared (Comparative Examples 1, 2 and Examples 1 to 11 shown in Table 7 below).

As control, a single layer sample (Control Example 1 shown in Table 7 below) consisting only of host dye was prepared by the same procedure as above except that an additive was not added.

### [Measurement of Absorption Spectrum and Calculation of b/a Value]

The absorption spectra at wavelength range of 400 nm to 800 nm of the obtained recording layer samples and the control sample were measured by the same procedure as in the above-mentioned [Example Group 2]. Then the *b*/*a* values were calculated from the obtained absorption spectra by the method described earlier according to Fig. 7.

### [Light Resistance Test (Measurement of Retention Rate of Dye)]

The retention rates of dye, which can be used as the indications of light resistances, of each recording layer sample and the control sample were measured by the same procedure as in the above-mentioned [Example Group 2].

### [Results and Evaluations]

The results of *b*/*a* values and retention rates of dye of each recording layer sample obtained by the above-described procedure are shown in Table 7 below.

### [Table 7]

**Table 7: Evaluation 1 of recording layer samples (host dye A)**

| | Additive | | | Retention Rate of Dye (%) | b/a value **( ) |
|---|---|---|---|---|---|
| | No. | Ligand | Central Metal Ion | | |
| Comparative example 1 | (1) | (I-1) | Ni²⁺ | 10.3 | 0 |
| Comparative example 2 | (6) | (II-1) | Ni²⁺ | 13.4 | 0 |
| Example 1# | (4) | (I-2) | Cu²⁺ | 14.1 | 0 |
| Example 2# | (9) | (II-2) | Cu²⁺ | 19.6 | 0 |
| Example 3# | (3) | (I-1) | Co²⁺ | 27.8 | 0 |
| Example 4# | (8) | (II-2) | Co²⁺ | 50 | *0 |
| Example 5 | (10) | (III) | Co²⁺ | 35.8 | 0 |
| Example 6# | (2) | (I-1) | Fe²⁺ | 45.3 | 1.15 (a) |
| Example 7 | (7) | (II-2) | Fe²⁺ | 49.1 | 1.40 (a) |
| Example 8 | (11) | (IV-1) | Fe²⁺ | 28.4 | 0 |
| Example 9# | (13) | (V) | Fe²⁺ | 2 8.4 | 1.29 (a) |
| Example 10# | (5) | (I-A) | Fe²⁺ | 4 0.9 | 1.15 (a) |
| Example 11 | (12) | (IV-2) | Fe²⁺ | 33.1 | 1.09 (a) |
| Control Example 1 | No additive was added | | | 0 | 0 |

| | | | | | |
|---|---|---|---|---|---|
| * No absorption maximum was seen. However, the absorption was totally high. ** ( ) shows whether it is a case of Fig. 7(a) or 7(b). # Comparative Example | | | | | |

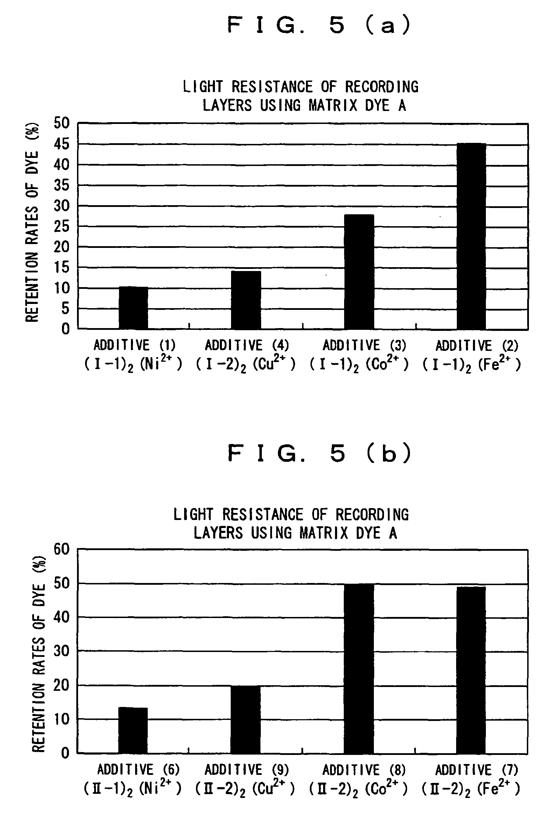

Figs. 5(a) and 5(b) are graphs representing differences of effects, according to central metal ions of additives, on the light resistance (retention rate of dye) of each recording layer sample.

Table 7 and Figs. 5(a), 5(b) show that greater effect of improving the light resistance can be obtained unalterably when the central metal ion is Cu²⁺, Co²⁺ or Fe²⁺, than when it is Ni²⁺, independently of the type of the ligand of the additive. In addition, though the retention rate of dye of the host dye (dye *A*) with no additive was 0 %, it has dramatically risen to 25 % to 50 % when an additive having Co²⁺ as central metal ion was added, and 45 % to 50 % when an additive having Fe²⁺ as central metal ion was added. This fact means a remarkable improvement in light resistance can be obtained. The result shows that the above-described additives having Cu²⁺, Co²⁺ or Fe²⁺ as central metal ion (namely, additives of the present invention) have excellent effect of improving the light resistance, even for dye *A*, one of azo metal-chelate dyes, which have been thought to be difficult to have advantage in light resistance.

### [Example Group 3 (2): Evaluation 2 of Recording Layer]

### [Preparation of Sample]

Recording layer samples were prepared (Comparative Examples 3, 4 and Examples 12 to 22 shown in Table 8 below) by the same procedure as in the above-mentioned [Example Group 3(1)]. A cyanine metal complex (dye *B*) represented by the following structural formula was used as host dye. Additives (1) to (13) shown in Tables 1 to 3 cited above were used as additives.

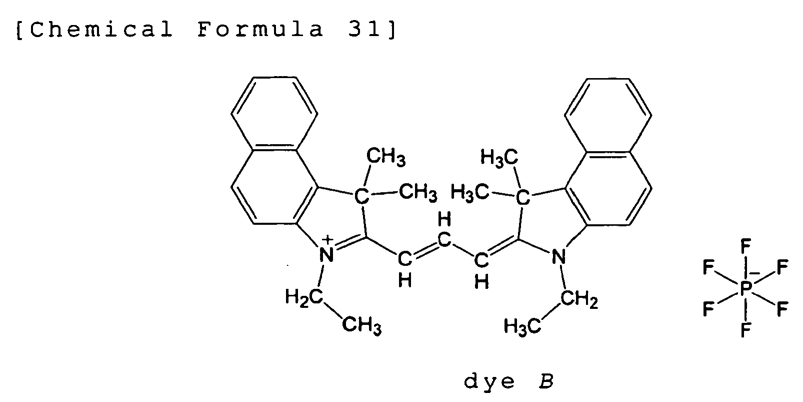

As control, a single layer sample (Control Example 2 shown in Table 8 below) consisting only of host dye B was prepared by the same procedure as above except that an additive was not added.

### [Calculation of b/a Value, Measurement of Retention Rate of Dye, Results and Evaluations]

The measurement of the absorption spectra, calculation of the *b*/*a* values and measurement of the retention rates of dye, which can be used as the indications of light resistances, with respect to the obtained recording layer samples and the control sample were carried out by the same procedure as in the above-mentioned [Example Group 3 (1)]. The results are shown in Table 8 below.

### [Table 8]

**Table 8: Evaluation 2 of recording layer samples (host dye B)**

| | Additive | | | Retention Rate of Dye (%) | b/a value ** ( ) |
|---|---|---|---|---|---|
| | No. | Ligand | Central Metal Ion | | |
| Comparative Example 3 | (1) | (I-1) | Ni²⁺ | 39.3 | 0 |
| Comparative Example 4 | (6) | (II-1) | Ni²⁺ | 54.9 | 0 |
| Example 12 # | (4) | (I-2) | Cu²⁺ | 61 | 0 |
| Example 13 # | (9) | (II-2) | Cu²⁺ | 71.1 | 0 |
| Example 14 # | (3) | (I-1) | Co²⁺ | 86.3 | 0 |
| Example 15 | (8) | (II-2) | Co²⁺ | 92 | * 0 |
| Example 16 # | (10) | (III) | Co²⁺ | 89.8 | 0 |
| Example 17 | (2) | (I-1) | Fe²⁺ | 82 | 1.15 (a) |
| Example 18 | (7) | (II-2) | Fe²⁺ | 89.2 | 1.21 (a) |
| Example 19 | (11) | (IV-1) | Fe²⁺ | 69.3 | 0 |
| Example 20 | (13) | (V) | Fe²⁺ | 76.9 | 1.20 (a) |
| Example 21 | (5) | (I-A) | Fe²⁺ | 75.3 | 1.07 (a) |
| Example 22 | (12) | (IV-2) | Fe²⁺ | 76.3 | 1.09 (a) |
| Control 2 Example 2 | No additive was added | | | 0 | 0 |

| | | | | | |
|---|---|---|---|---|---|
| * No absorption maximum was seen. However, the absorption was totally high. ** ( ) shows whether it is a case of Fig. 7 (a) or 7 (b). # Comparative Example I | | | | | |

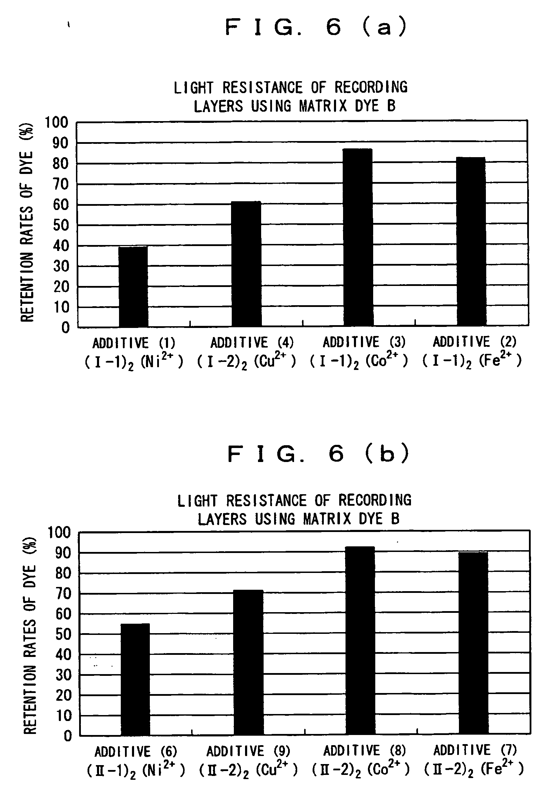

Figs. 6(a) and 6(b) are graphs representing differences of effects, according to central metal ions of additives, on the light resistance (retention rate of dye) of each recording layer sample.

Table 8 and Figs. 6(a), 6(b) show that much greater effect by the additives of the present invention can be obtained when dye B, one of cyanine dyes, is used as host dye, than when azo metal-chelate dye is used as host dye (this is the case shown in [Example Group 3(1)]). However, the differences of effects according to central metal ions are almost the same between both of these cases. Namely, the result shows that a remarkable effect of improving light resistance can be obtained, by the fact that the above-mentioned recording layer contains at least an metal-chelate dye additive, of which central metal ion is any one of Cu²⁺, Fe²⁺ and Co²⁺.

### [Consideration of the Results of Example Groups 3(1) and 3(2)]

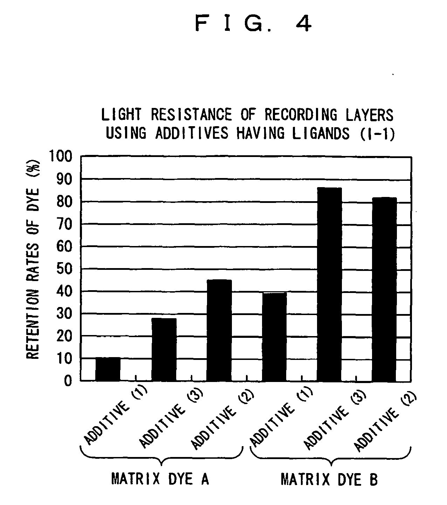

Fig. 4 and Figs. 5(a), 5(b) are all graphs representing a retention rates of dye of recording layer samples of Example Groups 3(1) and 3(2). More specifically, Fig. 4 shows results representing the difference in effects according to central metal ions on dye *A* and dye *B*. All the additives in Fig. 4 have ligand (I-1). On the other hand, Figs. 5(a) and 5(b) show results representing the difference in effects according to central metal ions on dye A. The additives in Fig. 5(a) have ligands (I-1) and (I-2). Separately, the additives in Fig. 5(b) have ligands (II-1) and (II-2).

With respect to the effect on dye A, which has been difficult to have advantage in light resistance, Figs. 4 and 5(a) show that the additive having Fe²⁺ as central metal ion (namely, additive (2)) has much greater effect when the additive has azo dye compound (I-1) as ligands. On the other hand, Fig. 5(b) shows that the additives having Co²⁺ and Fe²⁺ as central metal ions (namely, additive (3) and additive (7)) have much greater effects when the additives has azo dye compound (II-1) or (II-2) as ligands.

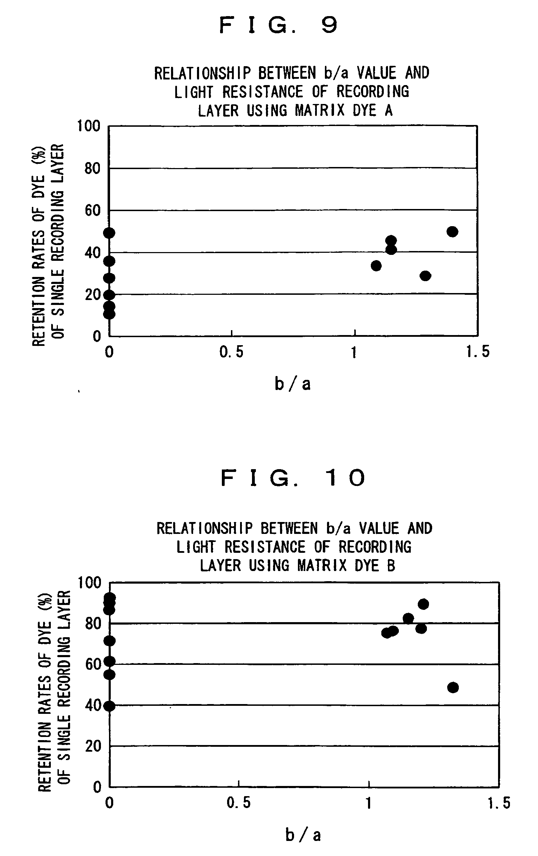

Figs. 9 and 10 are graphs showing the relationship between the b/a value and the light resistance of recording layer samples in Example Groups 3(1) and 3(2) respectively. Figs. 9 and 10 show that, as described earlier, the light resistance tends to be increased steadily when the b/a value is larger than 1.

### [Example Group 3 (3): Evaluation 3 of Recording Layer]

### [Preparation of Sample]

Recording layer samples were prepared (Examples 23 to 27 shown in Table 9 below) by the same procedure as in the above-mentioned [Example Group 3(1)]. A dye for recording using blue laser beam (dye C) represented by the following structural formula was used as host dye. Additives (8) shown in Table 2 cited above and additives (14) to (17) shown in Table 4 cited above were used as additives.

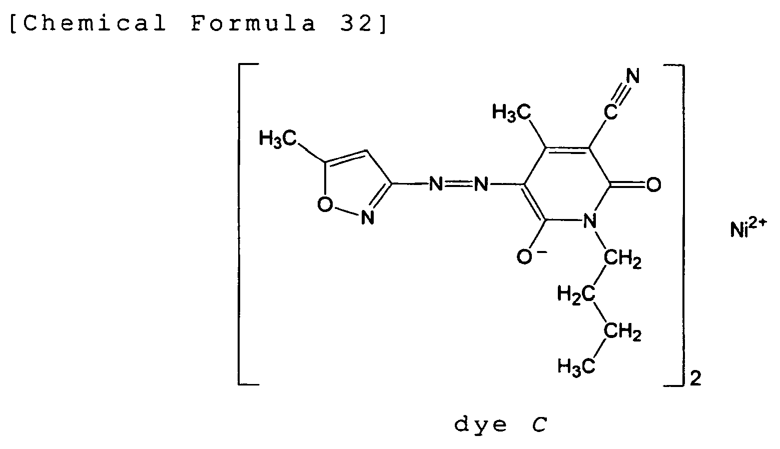

As control, a single layer sample (Control Example 3 shown in Table 9 below) consisting only of host dye C was prepared by the same procedure as above except that an additive was not added.

### [Calculation of b/a Value, Measurement of Retention Rate of Dye, Results and Evaluations]

The measurement of the absorption spectra, calculation of the *b*/*a* values and measurement of the retention rates of dye, which can be used as the indications of light resistances, with respect to each of the obtained recording layer samples and the control sample were carried out by the same procedure as in the above-mentioned [Example Group 3 (1)]. The results are shown in Table 9 below.

### [Table 9]

**Table 9: Evaluation 3 of recording layer samples (host dye C)**

| | Additive | | | Retention Rate of Dye (%) | b/a value |
|---|---|---|---|---|---|
| | No. | Ligand | Central Metal Ion | | |
| Example 23 | (8) | (II-2) | Co²⁺ | 90.7 | * 0 |
| Example 24 | (14) | (VII) | Fe²⁺ | 85.5 | Not measured |
| Example 25 | (15) | (VIII) | Fe²⁺ | 74.1 | Not measured |
| Example 26 | (16) | (IX) | Fe²⁺ | 83.1 | Not measured |
| Example 27 | (17) | (X) | Fe²⁺ | 85.2 | Not measured |
| Control Example 3 | No additive was added | | | 63.2 | 0 |

| | | | | | |
|---|---|---|---|---|---|
| * No absorption maximum was seen. However, the absorption was totally high. | | | | | |

Dye *C*, a dye for blue laser beam, has rather good retention rate of dye of 63.2 % and has been thought to be difficult to obtain the effect of improving light resistance by using an additive. However, the result in Table 9 shows that an apparent improvement effect of the retention rate of dye, up to 70 % to a little more than 90 %, can be obtained when additives (8), and (14) to (17) of the present invention, having Fe²⁺ or Co²⁺ as central metal ion, are added. Among these additives, the effects of additive (8) [namely, (II-2)₂(Co²⁺) dye additive], additive (14) [namely, (VII)₂(Fe²⁺) dye additive], additive (16) [namely, (IX)₂(Fe²⁺) dye additive] and additive (17) [namely, (X)₂(Fe²⁺) dye additive] are thought to be particularly excellent.

### [Example Group 3 (4): Evaluation 4 of Recording Layer]

### [Preparation of Sample]

Recording layer samples were prepared (Examples 28 to 32 shown in Table 10 below) by the same procedure as in the above-mentioned [Example Group 3(1)]. A dye represented by the following structural formula (dye *D*) was used as host dye. Additives (8) shown in Table 2 cited above and additives (14) to (17) shown in Table 4 cited above were used as additives.

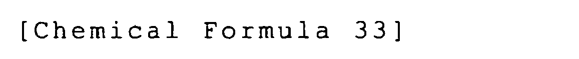

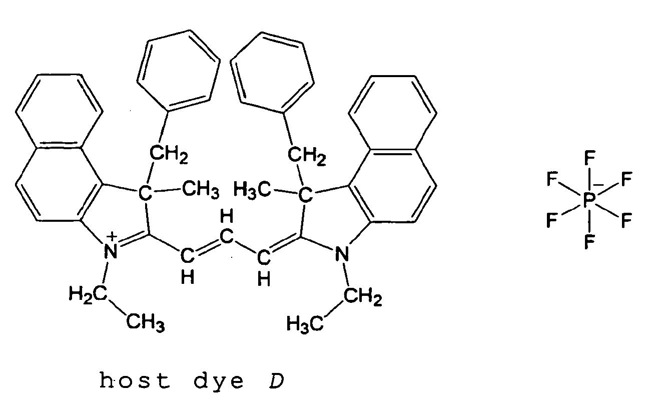

As control, a single layer sample (Control Example 4 shown in Table 10 below) consisting only of host dye *D* was prepared by the same procedure as above except that an additive was not added.

### [Calculation of b/a Value, Measurement of Retention Rate of Dye, Results and Evaluations]

The measurement of the absorption spectra, calculation of the *b*/*a* values and measurement of the retention rates of dye, which can be used as the indications of light resistances, with respect to each of the obtained recording layer samples and the control sample were carried out by the same procedure as in the above-mentioned [Example Group 3 (1)]. The results are shown in Table 10 below.

### [Table 10]

**Table 10: Evaluation 4 of recording layer samples (host dye D)**

| | Additive | | | Retention Rate of Dye (%) | b/a value ** ( ) |
|---|---|---|---|---|---|
| | No. | Ligand | Central Metal Ion | | |
| Example 28 | (8) | (II-2) | Co²⁺ | 91.5 | * 0 |
| Example 29 | (14) | (VII) | Fe²⁺ | 76.9 | 1.13 (a) |
| Example 30 | (15) | (VIII) | Fe²⁺ | 74.1 | 1.26 (a) |
| Example 31 | (16) | (IX) | Fe²⁺ | 83.8 | 1.17 (a) |
| Example 32 | (17) | (X) | Fe²⁺ | 89.9 | 1.29 (a) |
| Control Example 4 | No additive was added | | | 0 | 0 |

| | | | | | |
|---|---|---|---|---|---|
| * No absorption maximum was seen. However, the absorption was totally high. * * ( ) shows whether it is a case of Fig. 7 (a) or 7(b). | | | | | |

The result in Table 10 shows that the retention rates of dye were increased up to 70 % to a little more than 90 % when additives (8), and (14) to (17) of the present invention, having Fe²⁺ or Co²⁺ as central metal ion, are added, which means that a dramatically excellent effect of improving light resistance can be obtained. Among these additives, the effects of additive (8) [namely, (II-2)₂(Co²⁺) dye additive], additive (16) [namely, (IX)₂(Fe²⁺) dye additive] and additive (17) [namely, (X)₂(Fe²⁺) dye additive] are thought to be particularly excellent.

Figs. 12(a) and 12(b) show absorption spectra of single layer dyes of additives (8) and (17) respectively. Both of Figs. 12(a) and 12(b) show extremely broad overlaps of the absorption bands, which are usually unseen for an azo metal-chelate dye of an usual recording layer.

### [Example Group 4: Evaluation of Optical Recording Medium]

### [Preparation of Optical Recording Medium]

Dye *D*, described in the above [Example Group 3(4)] (as host dye), dye (1) in Table 1 in the above [Example Group 2] and, as additive, dye (2) in Table 1 in the above [Example Group 2] were used, with weight % being 35, 60 and 5 respectively. By dissolving these dye D, dye (1) and dye (2) in TFP with their total concentration being 1.3 weight %, a coating liquid for forming a recording layer was prepared.

The obtained coating liquid was deposited on a supporting substrate, having a thickness of 0.6 mm and a guide groove with 0.74 µm of track pitch, 320 nm of width and 60 nm of depth, by spin coating (at rotation speed of 1000 rpm to 6000 rpm), in a manner that it had a thickness corresponding to the absorbance (at wavelength of 598 nm, measured with air being the reference) of 0.65. Thereby a recording layer was formed. The film thickness of the groove part of the obtained recording layer was 50 nm.

Then on the recording layer, silver was deposited by sputtering, and thereby a reflective film made of silver having a thickness of 120 nm was formed. Further, a protective layer was formed thereon by coating KAYARAD SPC-920 (Nippon Kayaku Co., Ltd.) with a thickness of 10 µm.

Two laminated bodies, prepared by the above procedure, were bonded together with each substrate being located outside, using an ultraviolet cure adhesive (SK7100, Sony Chemical). Thereby, an optical disk (optical recording medium) was prepared.

### [Recording Test]

Random signals added with EFM+ modulation and having a minimum mark length of 0.4 µm were recorded on the obtained optical disk at a recording speed of 28.0 m/s (8 times as rapid as the speed of DVD-R), using a recording/reading apparatus having a wavelength of 650 nm and a numerical aperture of 0.65, based on the recording pulse strategy which is compliant with a standard of "DVD-R Specification for General Version 2.1" or "DVD+R Specification Version 1.20". Then the signals at the recorded portion was read (reproduced) by the same evaluation machine. In this case, good read signals (reproduced signals) can be obtained.

### [Light Resistance Test]

After this optical disk was irradiated with Xe lamp (550 W/m², black panel temperature of 63 °C) for 40 hours (equivalent to Wool scale #5) by a light resistance testing machine SUNTEST XLS+ (Toyo Seiki), the signals at the above recorded portion were read (reproduced) by the above evaluation machine. Also in this case, good read signals (reproduced signals) can be obtained, which means that the light resistance was improved.

### [Comparative Example Group 1]

Recording layer samples were prepared by the same procedure as in [Example Group 3(1)] and the light resistance test (measurement of the retention rate of dye) was carried out (Comparative Examples 5 to 9 in Table 11 to be described later), except that compounds (Q1) to (Q5) represented by the following structural formulae, which have been known as singlet oxygen quenchers conventionally, were added instead of additives (1) to (13) in Tables 1 to 3 cited before in above-described [Example Group 3(1)].

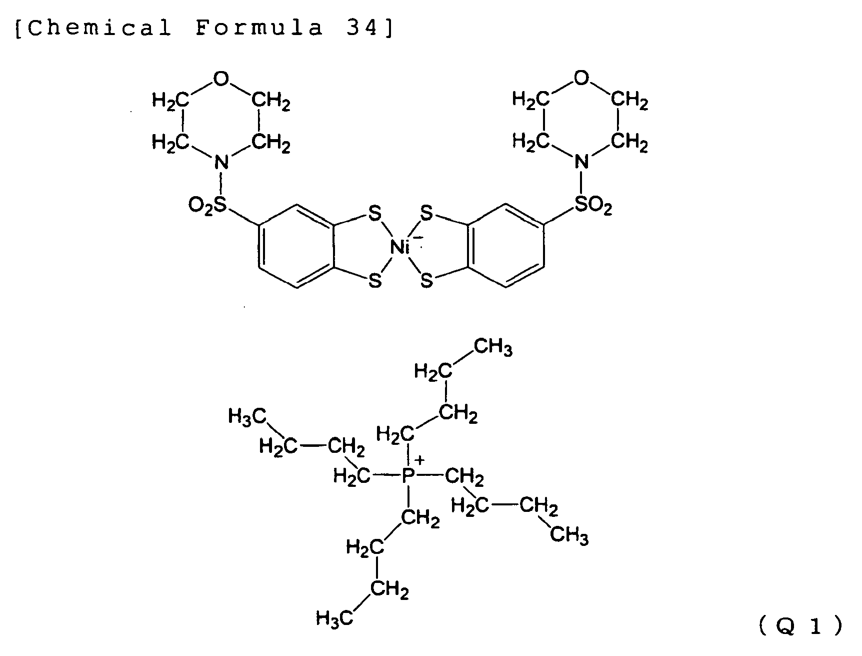

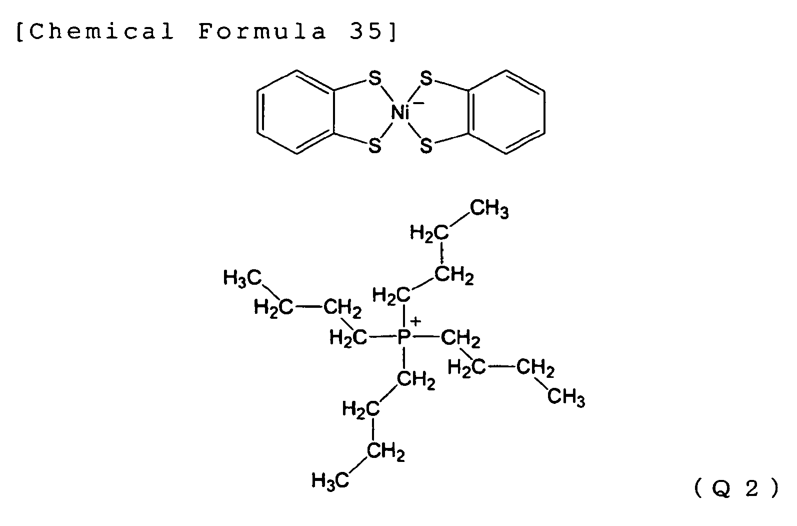

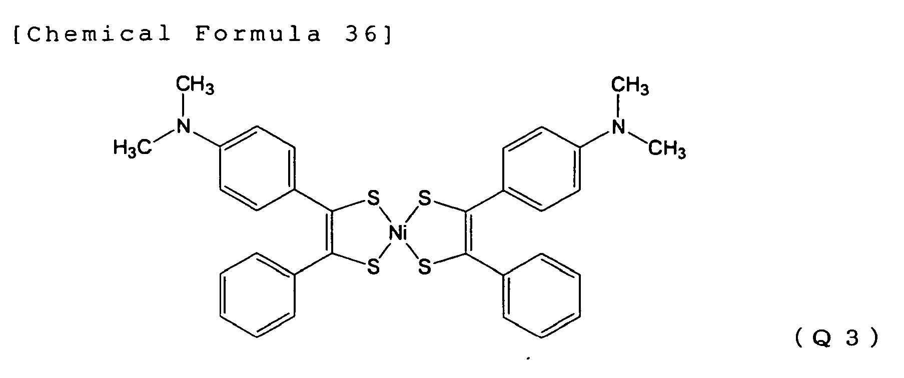

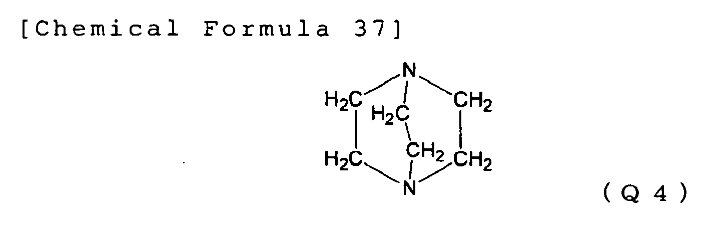

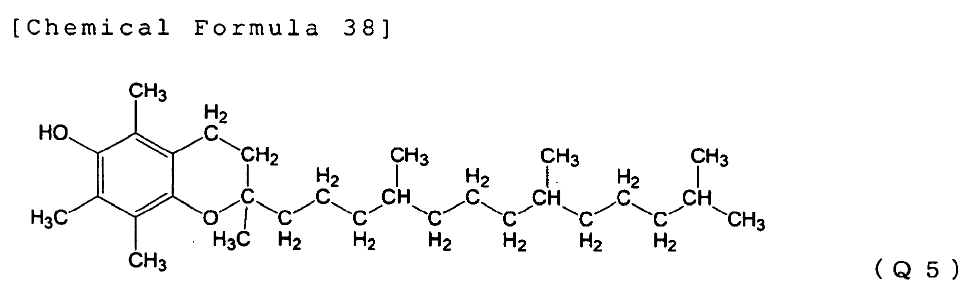

The results are shown in Table 11 below. As is clear from Fig. 11, no excellent result can be obtained with any of singlet oxygen quenchers (Q1) to (Q5).

### [Table 11]

**Table 11: Evalution 5 of recording layer samples (host dye A)**

| | Singlet Oxygen Quencher | Absorption maximum wavelength at 400 nm to 800 nm (in chloroform) * | Retention Rate of Dye (%) |
|---|---|---|---|
| Comparative Example 5 | (Q1) | 400 (100) | 11.9 |
| Comparative Example 6 | (Q2) | 800 [Absorption shoulder] | 11.2 |
| Comparative Example 7 | (Q3) | 600 ~ 700[lower band of absorption], shoulder], 400 nm [absorption shoulder], 800 nm [absorption shoulder] | 0 |
| Comparative Example 8 | (Q4) | Not measured | 0 |
| Comparative Example 9 | (Q5) | Not measured | 0 |
| Control Example 1 | No additive was added | _ | 0 |

| | | | |
|---|---|---|---|
| * Relative intensities when absorbance of an absorption peak representing the largest absorbance is assumed to be 100 are shown in parentheses. | | | |

### [Comparative Example Group 2]

A recording layer sample was prepared by the same procedure as in [Example Group 3(2)] and the light resistance test (measurement of the retention rate of dye) was carried out (Comparative Example 10), except that compound (Q4) described above (this is a singlet oxygen quencher) was added instead of additives (1) to (13) in Tables 1 to 3 cited before in above-described [Example Group 3(2)].

The results are shown in Table 12 below. As is clear from Fig. 12, no effect of improving the light resistance can be obtained.

### [Table 12]

**Table 12: Evaluation 6 of recording layer samples (host dye B)**

| | Singlet Oxygen Quencher | Absorption maximum wavelength at 400 nm to 800 nm (in chloroform) | Retention Rate of Dye (%) |
|---|---|---|---|
| Comparative Example 10 | (Q4) | Not measured | 0 |
| Control Example 2 | No additive was added | - | 0 |

### Industrial Applicability

The present invention can be used preferably as an optical recording medium for red semiconductor laser or blue semiconductor laser, such as DVD±R.

The present invention has been explained in detail above with reference to specific embodiments. However, it is evident to those skilled in the art that various modifications can be added thereto without departing from the intention and the scope of the present invention.
This application is based on Japanese Patent Application Number 2005-231901 filed on August 10, 2005, and its entirety is incorporated herewith by reference.

## Claims

1. An azo iron chelate dye comprising two ligands, where active hydrogen contained in *X* is eliminated from an azo compound represented by general formula (III.) below respectively, and Fe²⁺ wherein said azo iron chelate dye has, in a state of film or solution, one or more absorption maximums art wavelength ranges of 400 nm to 630 nm and 680 nm to 800 nm, respectively: 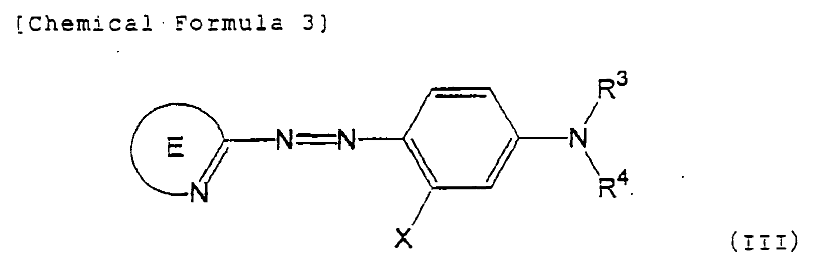 (In general formula (III),
ring *E* is an aromatic heterocycle, which may have a substituent;
*X* is an organic group having active hydrogen; and
*R*³ and *R*⁴ each represents, independently of each other, an alkyl group, which may have a substituent. However, *R³* and *R⁴* may be connected to each other to form a ring, and either one or both of *R³* and *R⁴* may be connected to a benzene ring to form 4 to 7 membered ring, which may be condensed to form a benzene ring;
All of rings *E*, *X, R³* and *R⁴*, belonging to the two ligands, may be the same as or different from each other.)

2. An azo metal-chelate dye additive to be used for a recording layer of an optical recording medium, wherein said azo metal-chelate dye additive comprises said azo iron chelate dye as defined in claim 1.

3. An optical recording medium comprising a substrate, a recording layer formed on said substrate and containing a host dye, which can make information be recorded or read by being irradiated with light having wavelength of 700 nm or shorter, and a reflective layer;
wherein said recording layer contains at least said azo metal-chelate dye additive as defined in claim 2.

4. An optical recording medium as defined in claim 3, wherein said azo metal-chelate dye additive is contained with the concentration of 0.1 weight % or more and 50 weight % or less in said host dye of said recording layer.

5. An optical recording medium as defined in claim 3, wherein said recording layer has one or more absorption maximums at wavelength ranges of 400 nm to 630 nm and 680 nm to 800 nm respectively.

6. An optical recording medium as defined in any one of claims 3 to 5, wherein said host dye is an azo metal-chelate dye comprising a ligand, where active hydrogen contained in *X* is eliminated from an azo compound represented by general formula (I) below, and Zn²⁺ : 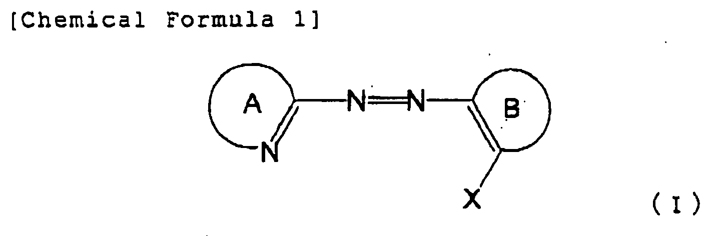 (In general formula (I),
ring *A* is an aromatic heterocycle, which may have a substituent;
*X* is an organic group having active hydrogen; and
ring *B* is an aromatic ring or aromatic heterocycle, which may have a substituent in addition to *X*.)

7. An optical recording medium as defined in any one of claims 3 to 5, wherein said host dye is a cyanine dye represented by general formula (II) below: 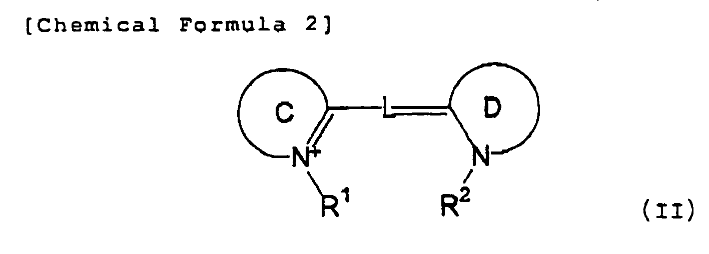 (In general formula (II),
ring C and ring *D* each represents, independently of each other, an indolenin ring, benzoindolenin ring or dibenzoindolenin ring;
*L* represents a monomethine group or trimethine group; and *R¹* and *R²* each represents, independently of each other, an alkyl group, which may have a substituent.)

8. An optical recording medium as defined claim 7, wherein said host dye is an azo metal-chelate dye comprising a ligand, where active hydrogen contained in *X* is eliminated from an azo compound represented by general formula (I) below, and Zn²⁺: 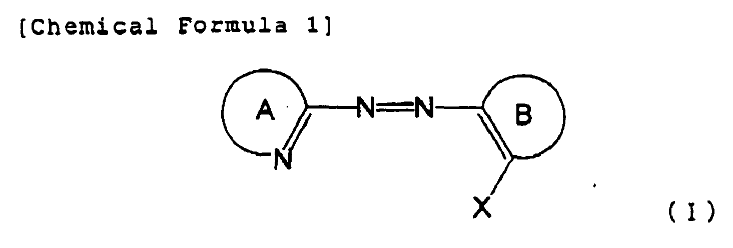 (In general formula (I),
ring *A* is an aromatic heterocycle, which may have a substituent;
*X* is an organic group having active hydrogen; and
ring *B* is an aromatic ring or aromatic heterocycle, which may have a substituent in addition to *X*.)

9. An optical recording medium as defined in any one of claims 7 to 8, wherein said host dye is a cyanine dye represented by general formula (II) below: 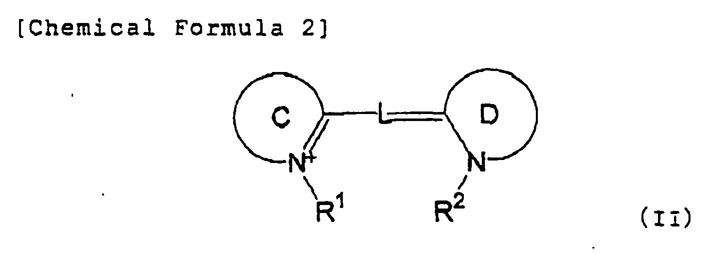 (In general formula (II),
ring *C* and ring *D* each represents, independently of each other, an indolenin ring, benzoindolenin ring or dibenzoindolenin ring;
*L* represents a monomethine group or trimethine group; and
*R¹* and *R²* each represents, independently of each other, an alkyl group, which may have a substituent.)

10. An azo metal-chelate dye additive to be used for a recording layer of an optical recording medium,
wherein said azo metal-chelate dye additive comprises two ligands, where active hydrogen contained in *X* is eliminated from an azo compound represented by general formula (IV) below respectively, and co²⁺, and
said azo metal-chelate dye additive has, in a state of film or solution, one or more absorption maximums at wavelength ranges of 400 nm to 630 nm and 680 nm to 800 nm respectively: 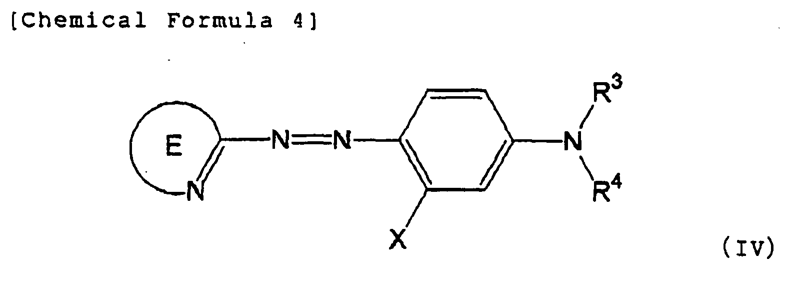 (In general formula (IV),
ring *E* is an aromatic heterocycle, which may have a substituent;
*X* is an organic group having active hydrogen; and
*R³* and *R⁴* each represents, independently of each other, an alkyl group, which may have a substituent; *R³* and *R⁴* may be connected to each other to form a ring, and either one or both of *R³* and *R⁴* may be connected to a benzene ring to form 4 to 7 membered ring, which may be condensed to form a benzene ring;
All of rings *E*, *X*, *R³* and *R⁴*, belonging to the two ligands, may be the same as or different from each other.)

## Patentansprüche

1. Azoeisenchelatfarbstoff, umfassend zwei Liganden, wobei aktiver Wasserstoff, enthalten in X, von einer Azoverbindung der nachfolgenden allgemeinen Formel (III) eliminiert wird, und Fe²⁺, wobei der genannte Azoeisenchelatfarbstoff, im Film- oder Lösungszustand, ein oder mehrere Absorptionsmaxima in den Wellenlängenbereichen von 400 nm bis 630 nm bzw. 680 nm bis 800 nm besitzt: 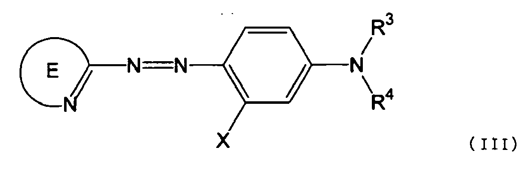 (in der allgemeinen Formel (III) gilt:
Ring E ist ein aromatischer Heterozyklus, der einen Substituenten besitzen kann;
X ist eine organische Gruppe mit aktivem Wasserstoff; und
R³ und R⁴ stellen jeweils unabhängig voneinander eine Alkylgruppe, die einen Substituenten besitzen kann, dar. R³ und R⁴ können miteinander verknüpft sein, um einen Ring zu bilden, und entweder eine Gruppe oder beide Gruppen von R³ und R⁴ können unter Bildung eines 4- bis 7-gliedrigen Ringes an einen Benzolring gebunden sein, der kondensiert sein kann, um einen Benzolring zu bilden;
alle Ringe E, X, R³ und R⁴, die zu den beiden Liganden gehören, können gleich oder verschieden voneinander sein.)

2. Azometallchelatfarbstoff-Additiv zur Anwendung in einer Aufnahmeschicht eines optischen Aufnahmemediums, wobei das Azometallchelatfarbstoff-Additiv den Azoeisenchelatfarbstoff nach Anspruch 1 umfasst.

3. Optisches Aufnahmemedium, umfassend ein Substrat, eine Aufnahmeschicht, die auf dem genannten Substrat gebildet wird und einen Grundfarbstoff enthält, der Information aufnehmen oder lesen kann, indem mit Licht der Wellenlänge 700 nm oder kürzer belichtet wird, und eine reflektierende Schicht;
wobei die genannte Aufnahmeschicht wenigstens das Azometallchelatfarbstoff-Additiv nach Anspruch 2 enthält.

4. Optisches Aufnahmemedium nach Anspruch 3, wobei das Azometallchelatfarbstoff-Additiv mit einer Konzentration von 0,1 Gew.% oder mehr und 50 Gew.% oder weniger in dem Grundfarbstoff der Aufnahmeschicht enthalten ist.

5. Optisches Aufnahmemedium nach Anspruch 3, wobei die Aufnahmeschicht ein oder mehrere Absorptionsmaxima in den Wellenlängenbereichen von 400 nm bis 630 nm bzw. 680 nm bis 800 nm besitzt.

6. Optisches Aufnahmemedium nach einem der Ansprüche 3 bis 5, wobei der Grundfarbstoff ein Azometallchelatfarbstoff ist, umfassend einen Liganden, wobei aktiver Wasserstoff, enthalten in X, von einer Azoverbindung der nachfolgenden allgemeinen Formel (I) eliminiert wird, und Zn²⁺: 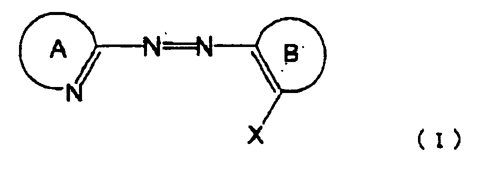 (in der allgemeinen Formel (I) gilt:
Ring A ist ein aromatischer Heterozyklus, der einen Substituenten besitzen kann;
X ist eine organische Gruppe mit aktivem Wasserstoff; und
Ring B ist ein aromatischer Ring oder aromatischer Heterozyklus, der zusätzlich zu X einen Substituenten besitzen kann.)

7. Optisches Aufnahmemedium nach einem der Ansprüche 3 bis 5, wobei der Grundfarbstoff ein Cyaninfarbstoff der nachfolgenden allgemeinen Formel (II) ist: 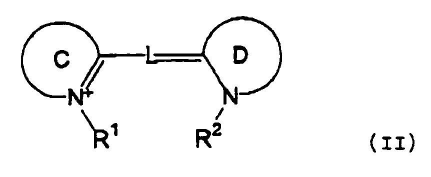 (in der allgemeinen Formel (II) gilt:
Ring C und Ring D stellen jeweils unabhängig voneinander einen Indoleninring, Benzoindoleninring oder Dibenzoindoleninring dar;
L stellt eine Monomethingruppe oder Trimethingruppe dar; und
R¹ und R² stellen jeweils unabhängig voneinander eine Alkylgruppe dar, die einen Substituenten besitzen kann).

8. Optisches Aufnahmemedium nach Anspruch 7, wobei der Grundfarbstoff ein Azometallchelatfarbstoff ist, umfassend einen Liganden, wobei aktiver Wasserstoff, enthalten in X, von einer Azoverbindung der nachfolgenden allgemeinen Formel (I) eliminiert wird, und Zn²⁺: 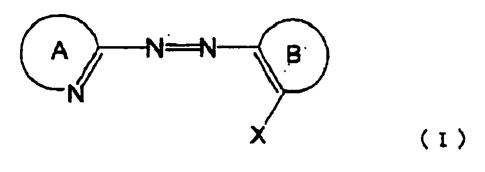 (in der allgemeinen Formel (I) gilt:
Ring A ist ein aromatischer Heterozyklus, der einen Substituenten besitzen kann;
X ist eine organische Gruppe mit aktivem Wasserstoff; und
Ring B ist ein aromatischer Ring oder aromatischer Heterozyklus, der zusätzlich zu X einen Substituenten besitzen kann).

9. Optisches Aufnahmemedium nach einem der Ansprüche 7 bis 8, wobei der Grundfarbstoff ein Cyaninfarbstoff der nachfolgenden allgemeinen Formel (II) ist: 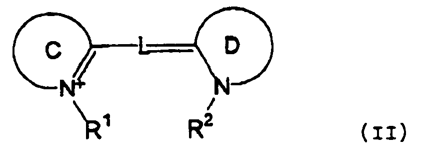 (in der allgemeinen Formel (II) gilt:
Ring C und Ring D stellen jeweils unabhängig voneinander einen Indoleninring, Benzoindoleninring oder Dibenzoindoleninring dar;
L stellt eine Monomethingruppe oder Trimethingruppe dar; und
R¹ und R² stellen jeweils unabhängig voneinander eine Alkylgruppe dar, die einen Substituenten besitzen kann).

10. Azometallchelatfarbstoff-Additiv zur Anwendung in einer Aufnahmeschicht eines optischen Aufnahmemediums, wobei das Azometallchelatfarbstoff-Additiv zwei Liganden, wobei aktiver Wasserstoff, enthalten in X, von einer Azoverbindung der nachfolgenden allgemeinen Formel (IV) eliminiert wird, und Co²⁺ umfasst, und
das Azometallchelatfarbstoff-Additiv im Film- oder Lösungszustand, ein oder mehrere Absorptionsmaxima in den Wellenlängenbereichen von 400 nm bis 630 nm bzw. 680 nm bis 800 nm besitzt: 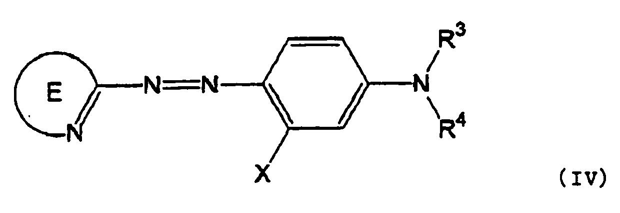 (in der allgemeinen Formel (IV) gilt:
Ring E ist ein aromatischer Heterozyklus, der einen Substituenten besitzen kann;
X ist eine organische Gruppe mit aktivem Wasserstoff; und
R³ und R⁴ stellen jeweils unabhängig voneinander eine Alkylgruppe, die einen Substituenten besitzen kann, dar. R³ und R⁴ können miteinander verknüpft sein, um einen Ring zu bilden, und entweder eine Gruppe oder beide Gruppen von R³ und R⁴ können unter Bildung eines 4- bis 7-gliedrigen Ringes an einen Benzolring gebunden sein, der kondensiert sein kann, um einen Benzolring zu bilden;
alle Ringe E, X, R³ und R⁴, die zu den beiden Liganden gehören, können gleich oder verschieden voneinander sein).

## Revendications

1. Colorant azoïque au chélate de fer comprenant deux ligands, où l'hydrogène actif contenu dans *X* est éliminé d'un composé azoïque représenté par la formule générale (III) ci-dessous respectivement, et du Fe²⁺ dans lequel ledit colorant azoïque au chélate de fer a, dans un état de film ou de solution, un ou plusieurs maximums d'absorption respectivement à des plages de longueur d'onde de 400 nm à 630 nm et 680 nm à 800 nm : 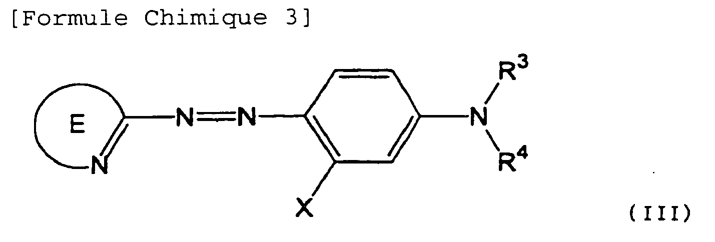 (Dans la formule générale (III),
l'anneau *E* est un hétérocycle aromatique, qui peut avoir un substituant ;
*X* est un groupe organique ayant de l'hydrogène actif ; et
*R³* et *R⁴* représentent chacun, indépendamment l'un de l'autre, un groupe alkyle, qui peut avoir un substituant, cependant, *R³* et *R⁴* peuvent être reliés l'un à l'autre pour former un anneau, et l'un ou l'autre ou les deux de R³ et *R⁴* peuvent être reliés à un anneau de benzène pour former un anneau à 4 à 7 éléments, qui peut être condensé pour former un anneau de benzène ;
tous les anneaux *E*, *X*, *R³* et *R⁴*, appartenant aux deux ligands, peuvent être les mêmes ou différents les uns des autres.)

2. Additif de colorant azoïque au chélate de métal devant être utilisé pour une couche d'enregistrement d'un support d'enregistrement optique, dans lequel ledit additif de colorant azoïque au chélate de métal comprend ledit colorant azoïque au chélate de fer tel que défini dans la revendication 1.

3. Support d'enregistrement optique comprenant un substrat, une couche d'enregistrement formée sur ledit substrat et contenant un colorant hôte, qui peut faire que des informations sont enregistrées ou lues en étant irradiées par de la lumière ayant une longueur d'onde de 700 nm ou plus courte, et une couche réfléchissante ;
dans lequel ladite couche d'enregistrement contient au moins ledit additif de colorant azoïque au chélate de métal tel que défini dans la revendication 2.

4. Support d'enregistrement optique selon la revendication 3, dans lequel ledit additif de colorant azoïque au chélate de métal est contenu avec la concentration de 0,1 % en poids ou plus et 50 % en poids ou moins dans ledit colorant hôte de ladite couche d'enregistrement.

5. Support d'enregistrement optique selon la revendication 3, dans lequel ladite couche d'enregistrement a un ou plusieurs maximums d'absorption à des plages de longueur d'onde de 400 nm à 630 nm et 680 nm à 800 nm, respectivement.

6. Support d'enregistrement optique selon l'une quelconque des revendications 3 à 5, dans lequel ledit colorant hôte est un colorant azoïque au chélate de métal comprenant un ligand, où l'hydrogène actif contenu dans X est éliminé d'un composé azoïque représenté par la formule générale (I) ci-dessous, et du Zn²⁺ : 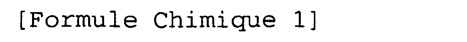 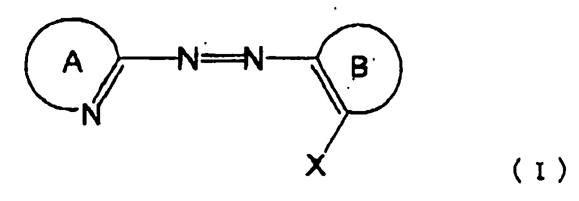 (Dans la formule générale (I),
l'anneau A est un hétérocycle aromatique, qui peut avoir un substituant ;
X est un groupe organique ayant de l'hydrogène actif ; et
l'anneau B est un noyau aromatique ou un hétérocycle aromatique, qui peut avoir un substituant en plus de *X*.)

7. Support d'enregistrement optique selon l'une quelconque des revendications 3 à 5, dans lequel ledit colorant hôte est un colorant de cyanine représenté par la formule générale (II) ci-dessous : 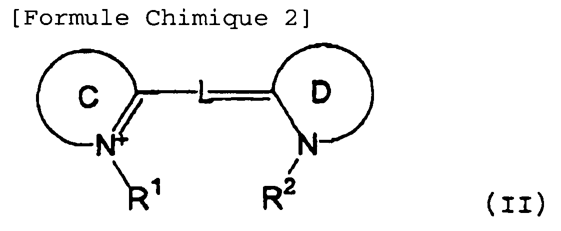 (Dans la formule générale (II),
l'anneau C et l'anneau D représentent chacun, indépendamment l'un de l'autre, un anneau d'indolénine, un anneau de benzoindolénine ou un anneau de dibenzoindoléine ;
*L* représente un groupe monométhine ou un groupe triméthine ; et
*R¹* et *R²* représentent chacun, indépendamment l'un de l'autre, un groupe alkyle, qui peut avoir un substituant.)

8. Support d'enregistrement optique selon la revendication 7, dans lequel ledit colorant hôte est un colorant azoïque au chélate de métal comprenant un ligand, où de l'hydrogène actif contenu dans *X* est éliminé d'un composé azoïque représenté par la formule générale (I) ci-dessous, et du Zn²⁺: 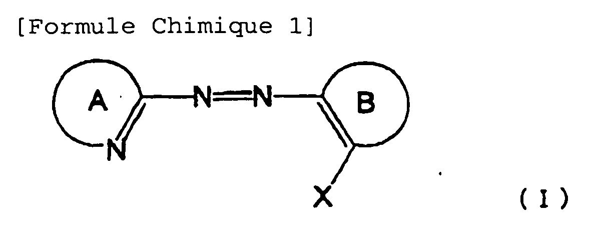 (Dans la formule générale (I),
l'anneau A est un hétérocycle aromatique, qui peut avoir un substituant ;
X est un groupe organique ayant de l'hydrogène actif ; et
l'anneau B est un noyau aromatique ou un hétérocycle aromatique, qui peut avoir un substituant en plus de *X*.)

9. Support d'enregistrement optique selon l'une quelconque des revendications 7 à 8, dans lequel ledit colorant hôte est un colorant de cyanine représenté par la formule générale (II) ci-dessous : 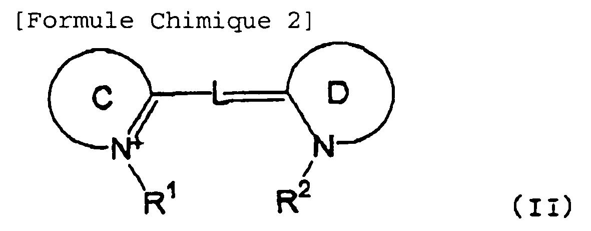 (Dans la formule générale (II),
l'anneau C et l'anneau D représentent chacun, indépendamment l'un de l'autre, un anneau d'indolénine, un anneau de benzoindolénine ou un anneau de dibenzoindoléine ;
L représente un groupe monométhine ou un groupe triméthine ; et
*R¹* et *R²* représentent chacun, indépendamment l'un de l'autre, un groupe alkyle, qui peut avoir un substituant.)

10. Additif de colorant azoïque au chélate de métal devant être utilisé pour une couche d'enregistrement d'un support d'enregistrement optique,
dans lequel ledit additif de colorant azoïque au chélate de métal comprend deux ligands, où de l'hydrogène actif contenu dans *X* est éliminé d'un composé azoïque représenté par la formule générale (IV) ci-dessous respectivement, et du Co²⁺, et
ledit additif de colorant azoïque au chélate de métal a, dans un état de film ou de solution, un ou plusieurs maximums d'absorption respectivement à des plages de longueur d'onde de 400 nm à 630 nm et 680 nm à 800 nm : 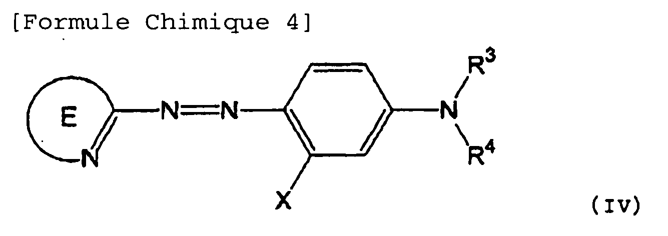 (Dans la formule générale (IV),
l'anneau E est un hétérocycle aromatique, qui peut avoir un substituant ;
X est un groupe organique ayant de l'hydrogène actif ; et
*R³* et *R⁴* représentent chacun, indépendamment l'un de l'autre, un groupe alkyle, qui peut avoir un substituant ;
*R³* et *R⁴* peuvent être reliés l'un à l'autre pour former un anneau, et l'un ou l'autre ou les deux de *R³* et *R⁴* peuvent être reliés à un anneau de benzène pour former un anneau à 4 à 7 éléments, qui peut être condensé pour former un anneau de benzène ;
tous les anneaux *E*, *X, R³* et *R⁴*, appartenant aux deux ligands, peuvent être les mêmes ou différents les uns des autres.)
